(19) **Europäisches Patentamt European Patent Office Office européen des brevets**

(11) **EP 4 715 887 A1**

(12) **EUROPEAN PATENT APPLICATION**

(43) Date of publication:
25.03.2026  Bulletin 2026/13

(21) Application number: 25199223.6

(22) Date of filing: 29.08.2025

(51) International Patent Classification (IPC):
*H01M 4/131* (2010.01)  *H01M 4/36* (2006.01)
*H01M 4/505* (2010.01)  *H01M 4/525* (2010.01)
*H01M 4/58* (2010.01)  *H01M 4/62* (2006.01)
*H01M 10/0525* (2010.01)  *H01M 10/0585* (2010.01)
*H01M 50/105* (2021.01)

(52) Cooperative Patent Classification (CPC):
**H01M 10/0525; H01M 4/131; H01M 4/366;
H01M 4/505; H01M 4/525; H01M 4/5825;
H01M 4/625; H01M 10/0585; H01M 50/105;**
H01M 2004/021; H01M 2004/028; Y02E 60/10;
Y02P 70/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 31.08.2024  CN 202411215660

(71) Applicant: **Ningde Amperex Technology Ltd.
Ningde City, Fujian Province 352100 (CN)**

(72) Inventors:
• SONG, Kexin
  Ningde City, Fujian Province, China, 352100 (CN)
• HUANG, Shaojun
  Ningde City, Fujian Province, China, 352100 (CN)
• WANG, Xiaoyu
  Ningde City, Fujian Province, China, 352100 (CN)
• LI, Cheng
  Ningde City, Fujian Province, China, 352100 (CN)

(74) Representative: **Icosa**
83 avenue Denfert-Rochereau
75014 Paris (FR)

(54) **SECONDARY BATTERY, PREPARATION METHOD FOR SECONDARY BATTERY, AND ELECTRONIC APPARATUS**

(57)    A secondary battery (001) includes an electrode assembly (01). The electrode assembly (01) includes first electrode plate (10), second electrode plates (20), and separators (30). The first electrode plates (10) include outer first electrode plates (101) and an inner first electrode plate. The outer first electrode plates (101) are located on the two outermost sides of the electrode assembly (01), respectively. The first electrode plate (10) include first current collector (11) and first active material layers (12). Each first current collector (11) includes a first surface and a second surface. The first surface is closer to a housing (02) than the second surface. The corresponding first active material layers (12) are disposed on a first surface and a second surface of the inner first electrode plate. At least one of the outer first electrode plates (101) is a single-sided first electrode plate. A first active material layer (12) disposed on the single-sided first electrode plate includes a first material layer (121) and a second material layer (122). A conductivity of the single-sided first electrode plate is A S/cm, and a conductivity of the inner first electrode plate (102) is B S/cm, where $A \leq B$.

FIG. 1

EP 4 715 887 A1

**Description**

**TECHNICAL FIELD**

This application relates to the technical field of electrochemistry, and in particular, to a secondary battery, a preparation method for the secondary battery, and an electronic apparatus.

**BACKGROUND**

A secondary battery, e.g., a lithium-ion battery, has the characteristics of high specific energy, high working voltage, low self-discharge rate, small size, low weight, etc., and thus has been widely used in the fields of consumer electronics.

At present, an electrode assembly in the lithium-ion battery is usually of a multi-tab and laminated structure to reduce impedance of the battery. In order to ensure the performance of the lithium-ion battery, such as ultra-thinness, and high energy density, a single-side-coated electrode plate is usually used as an electrode plate on the outermost layer of the electrode assembly. However, due to the particularity of the manufacturing process and structure of the single-side-coated electrode plate, the problem of black flecks or lithium plating likely to occur during the cycling process, leading to a reduction in the performance of the lithium-ion battery.

**SUMMARY**

An objective of this application is to provide a secondary battery, a preparation method for the secondary battery, and an electronic apparatus to reduce risks of black flecks and lithium plating on outer electrode plates of the electrode assembly and improve the cycle performance of the secondary battery.

It is hereby noted that in the summary of this application, this application is construed by using a lithium-ion battery as an example of the secondary battery, but the secondary battery of this application is not limited to the lithium-ion battery.

At present, in order to reduce the process cost and increase the energy density of the secondary battery, outermost electrode plates of an electrode assembly of a multi-tab and laminated structure in the lithium-ion battery are usually are single-side-coated electrode plates. That is, a material layer is only disposed on one side of a current collector of each electrode plate. Inner electrode plates are usually double-side-coated electrode plates, and the inner and outer electrode plates have the same material layers, which makes the an outer current density of the electrode assembly significantly higher than an inner current density. During the cycling process of the secondary battery, an outer electrolyte solution in the electrode assembly is consumed at a higher rate, black flecks or lithium plating is likely to occur on the outer single-side-coated electrode plates, leading to a reduction in the cycle performance and safety performance of the secondary battery. Based on this, this application provides a secondary battery, which can reduce the risks of black flecks and lithium plating on outer electrode plates of an electrode assembly and improve the cycle performance of the secondary battery. Specific technical solutions are as follows:

A first aspect of this application provides a secondary battery. The secondary battery includes an electrolyte solution, a housing, and an electrode assembly of a laminated structure. Along a thickness direction of the electrode assembly, the electrode assembly includes first electrode plates, second electrode plates, and separators disposed between the first electrode plates and the second electrode plates. The electrode assembly further includes a first tab assembly and a second tab assembly. The first tab assembly includes a plurality of first tabs, and the second tab assembly includes a plurality of second tabs. The plurality of first tabs correspond to the first electrode plates one to one, and the plurality of second tabs correspond to the second electrode plates one to one. The first electrode plates include two outer first electrode plates and at least one inner first electrode plate. Along the thickness direction of the electrode assembly, the two outer first electrode plates are located on two outermost sides of the electrode assembly, respectively, and the inner first electrode plate is located between the two outer first electrode plates. The first electrode plates include first current collectors and first active material layers. Each first current collector includes a first surface and a second surface that are oppositely disposed along the thickness direction of the electrode assembly. The first surface is closer to the housing than the second surface. The first active material layers are disposed on both the first surface and the second surface of the inner first electrode plate. At least one of the outer first electrode plates is a single-sided first electrode plate. The first active material layer is not disposed on the first surface of the single-sided first electrode plate, and the first active material layer is disposed on the second surface of the single-sided first electrode plate. The first active material layer disposed on the second surface of the single-sided first electrode plate includes a first material layer and a second material layer. The first material layer is located between the corresponding first current collector and the second material layer. A conductivity of the single-sided first electrode plate is A S/cm, and a conductivity of the inner first electrode plate is B S/cm, where $A \leq B$. By disposing double material layers on a single-sided outer electrode plate of the electrode assembly, and making the conductivity of the single-sided outer electrode plate less than or equal to the conductivity of an inner first electrode plate, in this case, the current density of the outer electrode plate of the electrode assembly is reduced, thereby reducing the consumption rate of the electrolyte solution during the cycling process, reducing the risks of black flecks and lithium plating on the outer electrode plates of the electrode assembly during the cycling process, and improving the cycle performance of the secondary battery.

In an embodiment of this application, $0.3 \leq A / B \leq 1$. In an embodiment of this application, $0.65 \leq A / B \leq 1$. By adjusting and controlling a ratio of A / B within the above ranges, it is conducive to reducing the risks of black flecks and lithium plating on the outer electrode plates of the electrode assembly during the cycling process, thereby improving the cycle performance of the secondary battery.

In an embodiment of this application, the first electrode plates are positive electrode plates. The effect of reducing the risks of black flecks and lithium plating on the outer electrode plates of the electrode assembly during the cycling process is more significant, thereby further improving the cycle performance of the secondary battery.

In an embodiment of this application, the first material layer includes a first active material. The first active material includes at least one of lithium iron phosphate, lithium manganese iron phosphate, or lithium manganese oxide. The second material layer includes a second active material. The second active material includes at least one of lithium cobalt oxide, lithium nickelate, lithium manganese oxide, a nickel-cobalt-manganese ternary material, or a lithium-rich manganese based material. Compared with outer electrode plates of a conventional electrode assembly, the impedance of the outer electrode plates of the electrode assembly is increased, thereby reducing the consumption rate of the outer electrolyte solution in the electrode assembly during the cycling process, which is conducive to reducing the risks of black flecks and lithium plating on the outer electrode plates of the electrode assembly during the cycling process, and in turn, improving the cycle performance of the secondary battery.

In an embodiment of this application, Dv50 of the first active material is 3 $\mu$m to 25 $\mu$m, and Dv99 of the first active material is 10 $\mu$m to 65 $\mu$m. Dv50 of the second active material is 4.5 $\mu$m to 24.5 $\mu$m, and Dv99 of the second active material is 45 $\mu$m to 65 $\mu$m. By adjusting and controlling Dv50 and Dv99 of the first active material and Dv50 and Dv99 of the second active material within the above ranges, it is conducive to reducing the risks of black flecks and lithium plating on the outer electrode plates of the electrode assembly during the cycling process, thereby improving the cycle performance of the secondary battery.

In an embodiment of this application, the first material layer includes a first binder. The second material layer includes a second binder. The first binder and the second binder each are at least one independently selected from polyvinylidene difluoride, polyvinylidene chloride, polyvinyl dichloride, aramid, polyamide, polyacrylonitrile, an acrylate polymer, styrene-butadiene rubber, a polyacrylate salt, sodium carboxymethylcellulose, polyvinylpyrrolidone, polyvinyl ether, a pure acrylic emulsion, or polyacrylic acid. Based on a mass of the first material layer, a mass percent of the first binder is 0.5% to 5%, and based on a mass of the second material layer, a mass percent of the second binder is 0.4% to 5%. By selecting the first binder and the second binder within the above range of types and adjusting and controlling the mass percent of the first binder and the mass percent of the second binder within the above ranges, it is conducive to reducing the risks of black flecks and lithium plating on the outer electrode plates of the electrode assembly during the cycling process, thereby improving the cycle performance of the secondary battery.

In an embodiment of this application, the first material layer includes a first conductive agent. The second material layer includes a second conductive agent. The first conductive agent and the second conductive agent each are at least one independently selected from conductive carbon black, carbon nanotubes, graphene, or conductive graphite. Based on the mass of the first material layer, a mass percent of the first conductive agent is 1% to 10%, and based on the mass of the second material layer, a mass percent of the second conductive agent is 1% to 10%. By selecting the first conductive agent and the second conductive agent within the above range of types and adjusting and controlling the mass percent of the first conductive agent and the mass percent of the second conductive agent within the above ranges, it is conducive to reducing the risks of black flecks and lithium plating on the outer electrode plates of the electrode assembly during the cycling process, thereby improving the cycle performance of the secondary battery.

In an embodiment of this application, the first active material layers disposed on the first surface and the second surface of the inner first electrode plate are third material layers. Each third material layer includes a third active material. The third active material includes at least one of lithium cobalt oxide, lithium nickelate, lithium manganese oxide, a nickel-cobalt-manganese ternary material, or a lithium-rich manganese based material. Based on a mass of the third material layer, a mass percent of the third active material is 85% to 98.6%. By selecting the third active material within the above range of types and adjusting and controlling the mass percent of the third active material within the above range, it is conducive to reducing the risks of black flecks and lithium plating on the outer electrode plates of the electrode assembly during the cycling process; moreover, the secondary battery has good cycle performance.

In an embodiment of this application, a thickness of the first material layer is 20 $\mu$m to 60 $\mu$m, and a thickness of the second material layer is 20 $\mu$m to 150 $\mu$m. By adjusting and controlling the thickness of the first material layer and the thickness of the second material layer within the above ranges, it is conducive to reducing the risks of black flecks and lithium plating on the outer electrode plates of the electrode assembly during the cycling process, and the cycle performance of the secondary battery is improved while the high energy density of the secondary battery is achieved concurrently.

In an embodiment of this application, a thickness of the third material layer is 80 $\mu$m to 250 $\mu$m. By adjusting and controlling the thickness of the third material layer within the above range, the risks of black flecks and lithium plating on the outer electrode plates of the electrode assembly during the cycling process are reduced, and the secondary battery has good cycle performance while having a high energy density.

In an embodiment of this application, $0.01 \leq B \leq 0.8$. By adjusting and controlling the conductivity of the inner first electrode plate within the above range, in this case, the current density of the inner electrode plate of the electrode assembly is large during the cycling process, which is conducive to improving the cycle performance of the secondary battery.

In an embodiment of this application, a thickness of the first current collector of the single-sided first electrode plate is $T_1$ $\mu$m. A thickness of the first current collector of the inner first electrode plate is $T_2$ $\mu$m, where $T1 \geq T2$. In an embodiment of this application, the first electrode plates are positive electrode plates, where $12 \leq T_1 \leq 25$, and $6 \leq T_2 \leq 16$. In an embodiment of this application, the first electrode plates are negative electrode plates, where $14 \leq T_1 \leq 25$, and $4 \leq T_2 \leq 16$. Through the above arrangement, it is conducive to alleviating the problem of warpage caused by a nonuniform stress of the first current collector due to only one surface of the first current collector of the single-sided first electrode plate being provided with a material layer. In this case, double material layers are disposed on the single-sided outer first electrode plate of the electrode assembly, such that the effects of making the conductivity of the single-sided first electrode plate less than or equal to the conductivity of the inner first electrode plate, and reducing the risks of black flecks and lithium plating on the outer electrode plates of the electrode assembly during the cycling process are more significant, and the secondary battery has good cycle performance.

In an embodiment of this application, the housing is an aluminum laminated film. When the aluminum laminated film is selected as the housing, it is conducive to reducing the risk of short circuit of the secondary battery, thereby improving the cycle performance and safety performance of the secondary battery.

In an embodiment of this application, the first electrode plates are negative electrode plates. The first material layer includes a first active material. A conductivity of the first active material is $c$ S/cm. The second material layer includes a second active material. A conductivity of the second active material is $d$ S/cm, where $c < d$. The first active material and the second active material each are at least one independently selected from natural graphite, artificial graphite, mesocarbon microbeads, hard carbon, soft carbon, silicon, or a silicon-carbon complex. When the first electrode plates are negative electrode plates, by disposing double material layers on the outer electrode plate of the electrode assembly, selecting the first active material and the second active material within the above range of types, and adjusting and controlling the conductivity of the first active material in the first material layer between the second material layer and the first current collector to be less than the conductivity of the second active material in the second material layer, it is conducive to reducing the risks of black flecks and lithium plating on the outer electrode plates of the electrode assembly during the cycling process, and in turn, improving the good cycle performance of the secondary battery.

In an embodiment of this application, the housing is a metal shell. When the metal shell is selected as the housing, it is conducive to reducing the risk of short circuit of the secondary battery, thereby improving the cycle performance and safety performance of the secondary battery.

A second aspect of this application provides a preparation method for the secondary battery. The preparation method includes the following steps: preparing the at least one single-sided first electrode plate, the at least one inner first electrode plate, the plurality of second electrode plates, the plurality of separators, the electrolyte solution, and the housing, and assembling same to obtain the secondary battery. A preparation method for the single-sided first electrode plate includes the following steps: disposing the first material layer and the second material layer on the second surface of the first current collector in sequence to obtain the single-sided first electrode plate. A preparation method for the inner first electrode plate includes the following steps: disposing the first active material layers on both the first surface and the second surface of the first current collector to obtain the inner first electrode plate. By using the above preparation method to prepare the secondary battery, it is conducive to process operation and production, the risks of black flecks and lithium plating on the outer electrode plates of the electrode assembly during the cycling process of the obtained secondary battery, and the secondary battery has good cycle performance.

In an embodiment of this application, the first material layer includes a first active material. A conductivity of the first active material is $a$ S/cm. The second material layer includes a second active material. A conductivity of the second active material is $b$ S/cm, where $a < b$. Compared with outer electrode plates of a conventional electrode assembly, the impedance of the outer electrode plates of the electrode assembly is increased, thereby reducing the consumption rate of the outer electrolyte solution in the electrode assembly during the cycling process, which is conducive to reducing the risks of black flecks and lithium plating on the outer electrode plates of the electrode assembly during the cycling process, and in turn, improving the cycle performance of the secondary battery.

A third aspect of this application provides an electronic device. The electronic device includes the secondary battery disclosed in any one of the preceding embodiments. The secondary battery in this application has good cycle performance. Therefore, the electronic apparatus in this application has a long service life.

The embodiments of this application have the beneficial effects that:

This application provides a secondary battery, a preparation method for the secondary battery, and an electronic apparatus. By disposing double material layers on a single-sided outer first electrode plate of the electrode assembly, and making the conductivity of the single-sided outer first electrode plate less than or equal to the conductivity of an inner first electrode plate, in this case, the current density of the outermost sides of the electrode assembly is reduced, thereby reducing the consumption rate of the electrolyte solution during the cycling process, reducing the risks of black flecks and lithium plating on the outer electrode plates of the electrode assembly during the cycling process, and improving the cycle performance of the secondary battery.

Definitely, a single product or method in which the technical solution of this application is implemented does not necessarily achieve all of the above advantages concurrently.

## BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.

FIG. 1 is a schematic structural diagram of a cross section of a secondary battery according to an embodiment of this application when viewed along a length direction thereof; and

FIG. 2 is a schematic structural diagram of another cross section of the secondary battery in FIG. 1 along the length direction thereof.

Reference numerals: secondary battery 001; electrode assembly 01; housing 02; first electrode plate 10; outer first electrode plate 101; inner first electrode plate 102; first current collector 11; first active material layer 12; first material layer 121; second material layer 122; third material layer 123; second electrode plate 20; second current collector 21; second active material layer 22; first tab assembly 13; first tab 131; second tab assembly 23; second tab 231; and separator 30.

## DETAILED DESCRIPTION

The following describes the technical solutions in some embodiments of this application clearly in detail with reference to the drawings appended hereto. Evidently, the described embodiments are merely a part of but not all of the embodiments of this application. All other embodiments derived by a person skilled in the art based on this application still fall within the protection scope of this application.

It is hereby noted that in the specific embodiments of this application, this application is explained by an example using a lithium-ion battery as a secondary battery, but the secondary battery of this application is not limited to the lithium-ion battery. Specific technical solutions are as follows:

A first aspect of this application provides a secondary battery. The secondary battery includes an electrolyte solution, a housing, and an electrode assembly of a laminated structure. Along a thickness direction of the electrode assembly, the electrode assembly includes first electrode plates, second electrode plates, and separators disposed between the first electrode plates and the second electrode plates. The electrode assembly further includes a first tab assembly and a second tab assembly. The first tab assembly includes a plurality of first tabs, and the second tab assembly includes a plurality of second tabs. The plurality of first tabs correspond to the first electrode plates one to one, and the plurality of second tabs correspond to the second electrode plates one to one. The first electrode plates include two outer first electrode plates and at least one inner first electrode plate. Along the thickness direction of the electrode assembly, the two outer first electrode plates are located on two outermost sides of the electrode assembly, respectively, and the inner first electrode plate is located between the two outer first electrode plates. The first electrode plates include first current collectors and first active material layers. Each first current collector includes a first surface and a second surface that are oppositely disposed along the thickness direction of the electrode assembly. The first surface is closer to the housing than the second surface. The first active material layers are disposed on both the first surface and the second surface of the inner first electrode plate. At least one of the outer first electrode plates is a single-sided first electrode plate. The first active material layer is not disposed on the first surface of the single-sided first electrode plate, and the first active material layer is disposed on the second surface of the single-sided first electrode plate. The first active material layer disposed on the second surface of the single-sided first electrode plate includes a first material layer and a second material layer. The first material layer is located between the corresponding first current collector and the second material layer. A conductivity of the single-sided first electrode plate is A S/cm, and a conductivity of the inner first electrode plate is B S/cm, where $A \leq B$.

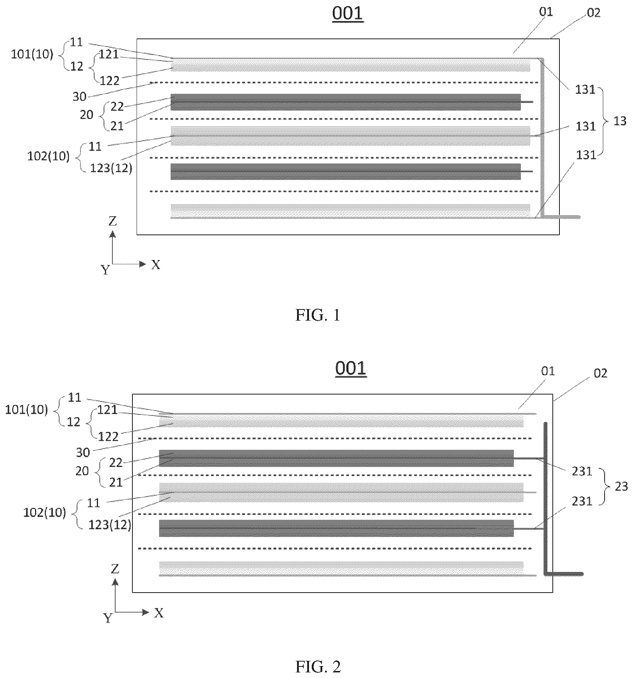

In this application, a width direction of the electrode assembly of the laminated structure is defined as an X direction, a length direction of the electrode assembly of the laminated structure is defined as a Y direction, and a thickness direction of the electrode assembly of the laminated structure is defined as a Z direction. Understandably, the first electrode plates, the second electrode plates, and the separators have the same length direction, width direction and thickness direction as the electrode assembly. As an example, as shown in FIG. 1 and FIG. 2, the secondary battery 001 includes an electrode assembly 01 of a laminated structure and a housing 02. Along the thickness direction Z of the electrode assembly 01, the electrode assembly 01 includes stacked first electrode plates 10, second electrode plates 20, and separators 30 disposed between the first electrode plates 10 and the second electrode plates 20. The electrode assembly 01 further includes a first tab assembly 13 and a second tab assembly 23. The first tab assembly 13 includes a plurality of first tabs 131, and the second tab assembly 23 includes a plurality of second tabs 231. The plurality of first tabs 131 correspond to the first electrode plates 10 one to one, and the plurality of second tabs 231 correspond to the second electrode plates 20 one to one. The first electrode plates 10 include two outer first electrode plates 101 and at least one inner first electrode plate 102. Along the thickness direction Z of the electrode assembly 01, the two outer first electrode plates 101 are located on two outermost sides of the electrode assembly 01, respectively, and the inner first electrode plate 102 is located between the two outer first electrode plates 101. The first electrode plates 10 include first current collectors 11 and first active material layers 12. Each first current collector 11 includes a first surface (not shown in the drawing) and a second surface (not shown in the drawing) that are oppositely disposed along the thickness direction Z of the electrode assembly 01. The first surface is closer to the housing 02 than the second surface. The first active material layers 12 are disposed on both the first surface and the second surface of the inner first electrode plate 102. The two outer first electrode plates 101 are single-sided first electrode plates. The first active material layer 12 is not disposed on the first surface of each single-sided first electrode plate, and the first active material layer 12 is disposed on the second surface of the single-sided first electrode plate. The first active material layer 12 disposed on the second surface of the single-sided first electrode plate 10 includes a first material layer 121 and a second material layer 122. The first material layer 121 is located between the corresponding first current collector 11 and the second material layer 122.

As found by the applicant through research, by additionally disposing a material layer between an active material layer of each single-sided outer electrode plate of the electrode assembly and a current collector, i.e., additionally disposing the first material layer between the first current collector and the second material layer, the impedance of the single-sided outer electrode plates is increased, such that the conductivity of the single-sided outer first electrode plates of the electrode assembly is greater than or equal to the conductivity of the inner first electrode plate, i.e., $A \leq B$. The current density of the outer electrode plates of the electrode assembly is reduced, thereby reducing the consumption rate of an electrolyte solution in the outer electrode plates of the electrode assembly during the cycling process, reducing the risks of black flecks and lithium plating on the outer electrode plates of the electrode assembly, and improving the cycle performance of the secondary battery. When the current density of the outer electrode plates of the electrode assembly is greater than the current density of the inner electrode plate, i.e., $A > B$, the consumption rate of the electrolyte solution in the outer electrode plates of the electrode assembly is too large, and the problem of black flecks or lithium plating is likely to occur in the outer electrode plates of the electrode assembly, which reduces the cycle performance and safety performance of the secondary battery. Therefore, by disposing double material layers on each single-sided outer electrode plate of the electrode assembly, and making the conductivity of the single-sided outer electrode plates less than or equal to the conductivity of the inner first electrode plate, in this case, the current density of the outer electrode plates of the electrode assembly is reduced, thereby reducing the consumption rate of the electrolyte solution during the cycling process, reducing the risks of black flecks and lithium plating on the outer electrode plates of the electrode assembly during the cycling process, and improving the cycle performance of the secondary battery.

It is hereby noted that, the first active material layers in this application may be disposed on entire regions of surfaces of the first current collectors and may also be disposed on partial regions of the surfaces of the first current collectors. There is no limitation in this application, as long as the objectives of this application can be achieved.

In an embodiment of this application, $0.3 \leq A/B \leq 1$. For example, the ratio of $A/B$ may be 0.3, 0.4, 0.5, 0.6, 0.7, 0.8, 0.9, 1, or a value falling within a range formed by any two thereof. By adjusting and controlling the value of $A/B$ within the above range, the current density of the outer electrode plates of the electrode assembly is greater than or equal to the current density of the inner electrode plate, and the consumption rate of the electrolyte solution is reduced during the cycling process, which is conducive to reducing the risks of black flecks and lithium plating on the outer electrode plates of the electrode assembly during the cycling process, and in turn, improving the cycle performance of the secondary battery.

In an embodiment of this application, $0.65 \leq A/B \leq 1$. For example, the ratio of $A/B$ may be 0.65, 0.68, 0.7, 0.72, 0.75, 0.78, 0.8, 0.82, 0.85, 0.88, 0.9, 0.92, 0.95, 0.98, 1, or a value falling within a range formed by any two thereof. By adjusting and controlling the value of $A/B$ within the above range, the current density of the outer electrode plates of the electrode assembly is greater than or equal to the current density of the inner electrode plate, and the consumption rate of the electrolyte solution is reduced during the cycling process, which is conducive to reducing the risks of black flecks and lithium plating on the outer electrode plates of the electrode assembly during the cycling process, and in turn, improving the cycle performance of the secondary battery.

In an embodiment of this application, the first electrode plates are positive electrode plates. When the positive electrode plates are selected as the first electrode plates, the outer first electrode plates of the electrode assembly are positive electrode plates, in this time, the consumption rate of the outer electrolyte solution in the electrode assembly during the cycling process is further reduced, the effect of reducing the risks of black flecks and lithium plating on the outer electrode plates of the electrode assembly during the cycling process is more significant, and thus the cycle performance of the secondary battery is further improved.

In an embodiment of this application, the first material layer includes a first active material. The first active material includes at least one of lithium iron phosphate (LFP), lithium manganese iron phosphate (LMFP), or lithium manganese oxide ($LiMn_2O_4$). The second material layer includes a second active material. The second active material includes at least one of lithium cobalt oxide ($LiCoO_2$), lithium nickelate ($LiNiO_2$), lithium manganese oxide ($LiMn_2O_4$), a nickel-cobalt-manganese ternary material, or a lithium-rich manganese based material. The suitable first active material and second active material are selected within the above ranges of types, such that the conductivities of the first active material and the second active material are within a suitable range. Compared with outer electrode plates of a conventional electrode assembly, the impedance of the outer electrode plates of the electrode assembly is increased, thereby reducing the current density of the outer electrode plates of the electrode assembly, and reducing the consumption rate of the outer electrolyte solution in the electrode assembly during the cycling process, which is conducive to reducing the risks of black flecks and lithium plating on the outer electrode plates of the electrode assembly during the cycling process, and in turn, improving the cycle performance of the secondary battery. In this application, the nickel-cobalt-manganese ternary material includes, but is not limited to, at least one of $LiNi_{0.90}Co_{0.05}Mn_{0.05}O_2$ (NCM955), NCM811, NCM622, NCM523, or NCM111. The lithium-rich manganese based material is a composite positive electrode material $Li_2MnO_3 \cdot LiMO_2$ based on $Li_2MnO_3$, where M is Ni, Co, Mn, or a binary or ternary layered material of Ni, Co, and Mn.

In an embodiment of this application, Dv50 of the first active material is 3 μm to 25 μm. For example, Dv50 of the first active material may be 3 μm, 5 μm, 8 μm, 10 μm, 12 μm, 15 μm, 18 μm, 20 μm, 22 μm, 25 μm, or a value falling within a range formed by any two thereof. Dv99 of the first active material is 10 μm to 65 μm. For example, Dv99 of the first active material may be 10 μm, 13 μm, 15 μm, 18 μm, 20 μm, 22 μm, 25 μm, 28 μm, 30 μm, 32 μm, 35 μm, 38 μm, 40 μm, 42 μm, 45 μm, 48 μm, 50 μm, 52 μm, 55 μm, 58 μm, 60 μm, 62 μm, 65 μm, or a value falling within a range formed by any two thereof. Dv50 of the second active material is 4.5 μm to 24.5 μm. For example, Dv50 of the second active material may be 4.5 μm, 4.8 μm, 5 μm, 8 μm, 10 μm, 12 μm, 15 μm, 18 μm, 20 μm, 22 μm, 23 μm, 24 μm, 24.2 μm, 24.5 μm, or a value falling within a range formed by any two thereof. Dv99 of the second active material is 45 μm to 65 μm. For example, Dv99 of the second active material may be 45 μm, 48 μm, 50 μm, 52 μm, 55 μm, 58 μm, 60 μm, 62 μm, 65 μm, or a value falling within a range formed by any two thereof. By adjusting and controlling Dv50 and Dv99 of the first active material and Dv50 and Dv99 of the second active material within the above ranges, the conductivities of the first active material and the second active material are within suitable ranges, which is conducive to further increasing the impedance of the first material layer and the second material layer, in turn, increasing the impedance of the outer electrode plates of the electrode assembly, and reducing the conductivity of the outer electrode plates of the electrode assembly, thereby reducing the current density of the outer electrode plates of the electrode assembly, and reducing the consumption rate of the outer electrolyte solution in the electrode assembly during the cycling process, which is conducive to reducing the risks of black flecks and lithium plating on the outer electrode plates of the electrode assembly during the cycling process, and in turn, improving the cycle performance of the secondary battery.

In this application, Dv50 represents a particle size corresponding to a cumulative volume percentage 50% in a volume-based particle size distribution curve of an active material viewed from a small-size side. Dv99 represents a particle size corresponding to a cumulative volume percentage 99% in a volume-based particle size distribution curve of an active material viewed from a small-size side. The methods for adjusting and controlling Dv50 and Dv99 of the active materials are not particularly limited in this application, as long as the objectives of this application can be achieved. For example, Dv50 and Dv99 of the active materials may be adjusted and controlled by grading and grinding particles of the active materials. As an example, when other conditions remain unchanged, extending the grinding time to reduce Dv50 and Dv99 of the active material; or shortening the grinding time to increase Dv50 and Dv99 of the active materials.

In an embodiment of this application, the first material layer includes a first binder. The second material layer includes a second binder. The first binder and the second binder each are at least one independently selected from polyvinylidene difluoride, polyvinylidene chloride, polyvinyl dichloride, aramid, polyamide, polyacrylonitrile, an acrylate polymer, styrene-butadiene rubber, a polyacrylate salt, sodium carboxymethylcellulose, polyvinylpyrrolidone, polyvinyl ether, a pure acrylic emulsion, or polyacrylic acid. Based on a mass of the first material layer, a mass percent $W_1$ of the first binder is 0.5% to 5%. For example, the mass percent $W_1$ of the first binder may be 0.5%, 0.8%, 1%, 1.2%, 1.5%, 1.8%, 2%, 2.2%, 2.5%, 2.8%, 3%, 3.2%, 3.5%, 3.8%, 4%, 4.2%, 4.5%, 4.8%, 5%, or a value falling within a range formed by any two thereof. Based on a mass of the second material layer, a mass percent $W_2$ of the second binder is 0.4% to 5%. For example, the mass percent $W_2$ of the second binder may be 0.4%, 0.5%, 0.8%, 1%, 1.2%, 1.5%, 1.8%, 2%, 2.2%, 2.5%, 2.8%, 3%, 3.2%, 3.5%, 3.8%, 4%, 4.2%, 4.5%, 4.8%, 5%, or a value falling within a range formed by any two thereof. By selecting the first binder and the second binder within the above range of types, and adjusting and controlling the mass percent of the first binder and the mass percent of the second binder within the above ranges, it is conducive to increasing the impedance of the outer electrode plates of the electrode assembly, and reducing the conductivity of the outer electrode plates of the electrode assembly, thereby reducing the current density of the outer electrode plates of the electrode assembly, and reducing the consumption rate of the outer electrolyte solution in the electrode assembly during the cycling process, which is conducive to reducing the risks of black flecks and lithium plating on the outer electrode plates of the electrode assembly during the cycling process, and in turn, improving the cycle performance of the secondary battery.

In an embodiment of this application, the first material layer includes a first conductive agent. The second material layer includes a second conductive agent. The first conductive agent and the second conductive agent each are at least one independently selected from conductive carbon black, carbon nanotubes, graphene, or conductive graphite. Based on the mass of the first material layer, a mass percent $W'_1$ of the first conductive agent is 1% to 10%. For example, the mass percent $W'1$ of the first conductive agent may be 1%, 2%, 3%, 4%, 5%, 6%, 7%, 8%, 9%, 10%, or a value falling within a range formed by any two thereof. Based on the mass of the second material layer, a mass percent $W'_2$ of the second conductive agent is 1% to 10%. For example, the mass percent $W'2$ of the second conductive agent may be 1%, 2%, 3%, 4%, 5%, 6%, 7%, 8%, 9%, 10%, or a value falling within a range formed by any two thereof. By selecting the first conductive agent and the second conductive agent within the above range of types, and adjusting and controlling the mass percent of the first conductive agent and the mass percent of the second conductive agent within the above ranges, it is conducive to increasing the impedance of the outer electrode plates of the electrode assembly, and reducing the conductivity of the outer electrode plates of the electrode assembly, thereby reducing the current density of the outer electrode plates of the electrode assembly, and reducing the consumption rate of the outer electrolyte solution in the electrode assembly during the cycling process, which is conducive to reducing the risks of black flecks and lithium plating on the outer electrode plates of the electrode assembly during the cycling process, and in turn, improving the cycle performance of the secondary battery.

In an embodiment of this application, based on the mass of the first material layer, a mass percent $W''_1$ of the first active material is 85% to 98.5%; and/or, based on the mass of the second material layer, a mass percent $W''_2$ of the second active material is 85% to 98.6%. For example, the mass percent $W''_1$ of the first active material may be 85%, 86%, 87%, 88%, 89%, 90%, 91%, 92%, 93%, 94%, 95%, 96%, 97%, 98%, 98.3%, 98.5%, or a value falling within a range formed by any two thereof; and the mass percent $W''_2$ of the second active material may be 85%, 86%, 87%, 88%, 89%, 90%, 91%, 92%, 93%, 94%, 95%, 96%, 97%, 98%, 98.2%, 98.4%, 98.5%, 98.6%, or a value falling within a range formed by any two thereof. By adjusting and controlling the mass percent of the first active material and/or the mass percent of the second active material within the above ranges, it is conducive to increasing the impedance of the outer electrode plates of the electrode assembly, thereby reducing the consumption rate of the outer electrolyte solution in the electrode assembly during the cycling process, which is conducive to reducing the risks of black flecks and lithium plating on the outer electrode plates of the electrode assembly during the cycling process; moreover, the secondary battery also has good cycle performance.

In an embodiment of this application, as shown in FIG. 1 and FIG. 2, the first active material layers 12 disposed on the first surface and the second surface of the inner first electrode plate 102 are third material layers 123. Each third material layers includes a third active material. The third active material includes at least one of lithium cobalt oxide, lithium nickelate, lithium manganese oxide, a nickel-cobalt-manganese ternary material, or a lithium-rich manganese based material. Based on a mass of the third material layer, a mass percent $W''_3$ of the third active material is 85% to 98.6%. For example, the mass percent $W''_3$ of the third active material may be 85%, 86%, 87%, 88%, 89%, 90%, 91%, 92%, 93%, 94%, 95%, 96%, 97%, 98%, 98.2%, 98.5%, 98.6%, or a value falling within a range formed by any two thereof. By selecting the above types of third active materials and adjusting and controlling the mass percent of the third active material within the above range, the inner electrode plate of the electrode assembly has a high conductivity, which is conducive to reducing the difference in conductivity between the inner and outer electrode plates of the electrode assembly; while the inner electrode plate of the electrode assembly has a high conductivity, the outer electrode plates of the electrode assembly have a relatively low conductivity, thereby reducing the consumption rate of the outer electrolyte solution in the electrode assembly during the cycling process, which is conducive to reducing the risks of black flecks and lithium plating on the outer electrode plates of the electrode assembly during the cycling process; moreover, the secondary battery also has good cycle performance.

In an embodiment of this application, as shown in FIG. 1 and FIG. 2, a thickness $H_1$ of the first material layer 121 is 20 μm to 60 μm, and a thickness $H_2$ of the second material layer 122 is 20 μm to 150 μm. For example, the thickness $H_1$ of the first material layer may be 20 μm, 23 μm, 25 μm, 28 μm, 30 μm, 32 μm, 35 μm, 38 μm, 40 μm, 42 μm, 45 μm, 48 μm, 50 μm, 52 μm, 55 μm, 58 μm, 60 μm, or a value falling within a range formed by any two thereof. The thickness $H_2$ of the second material layer may be 20 μm, 25 μm, 30 μm, 35 μm, 40 μm, 45 μm, 50 μm, 55 μm, 60 μm, 65 μm, 70 μm, 75 μm, 80 μm, 85 μm, 90 μm, 95 μm, 100 μm, 105 μm, 110 μm, 115 μm, 120 μm, 125 μm, 130 μm, 135 μm, 140 μm, 145 μm, 150 μm, or a value falling within a range formed by any two thereof. By adjusting and controlling the thickness of the first material layer and the thickness of the second material layer within the above ranges, it is conducive to increasing the impedance of the outer electrode plates of the electrode assembly, thereby reducing the consumption rate of the outer electrolyte solution in the electrode assembly during the cycling process, which is conducive to reducing the risks of black flecks and lithium plating on the outer electrode plates of the electrode assembly during the cycling process; and the cycle performance of the secondary battery is improved while the high energy density of the secondary battery is achieved concurrently.

In an embodiment of this application, as shown in FIG. 1 and FIG. 2, a thickness $H_3$ of the third material layer 123 is 80 $\mu$m to 250 $\mu$m. For example, the thickness $H_3$ of the third material layer may be 80 $\mu$m, 85 $\mu$m, 90 $\mu$m, 95 $\mu$m, 100 $\mu$m, 105 $\mu$m, 110 $\mu$m, 115 $\mu$m, 120 $\mu$m, 125 $\mu$m, 130 $\mu$m, 135 $\mu$m, 140 $\mu$m, 145 $\mu$m, 150 $\mu$m, 155 $\mu$m, 160 $\mu$m, 165 $\mu$m, 170 $\mu$m, 175 $\mu$m, 180 $\mu$m, 185 $\mu$m, 190 $\mu$m, 195 $\mu$m, 200 $\mu$m, 205 $\mu$m, 210 $\mu$m, 215 $\mu$m, 220 $\mu$m, 225 $\mu$m, 230 $\mu$m, 235 $\mu$m, 240 $\mu$m, 245 $\mu$m, 250 $\mu$m, or a value falling within a range formed by any two thereof. By adjusting and controlling the thickness of the third material layer within the above range, the secondary battery has a high energy density, moreover, the inner electrode plate of the electrode assembly has a high conductivity, and there is a relatively small difference in conductivity between the inner and outer electrode plates of the electrode assembly, which is conducive to reducing the consumption rate of the outer electrolyte solution of the electrode assembly during the cycling process, and reducing the risks of black flecks and lithium plating on the outer electrode plates of the electrode assembly during the cycling process; and the secondary battery has good cycle performance while having a high energy density.

In this application, the thickness of the material layer may be adjusted and controlled by means known to a person skilled in the art. For example, when the surface of a current collector is coated with a slurry, based on the definite solid content of the slurry, the thickness of the material layer may be increased by increasing the coating weight, and the thickness of the material layer may be reduced by reducing the coating weight. When cold calendering is performed on the electrode plate, the thickness of the material layer may also be reduced by increasing a cold calendering pressure, and the thickness of the material layer may also be increased by reducing the cold calendering pressure.

In an embodiment of this application, $0.01 \leq B \leq 0.8$. For example, the value of B may be 0.01, 0.012, 0.015, 0.018, 0.02, 0.3, 0.4, 0.5, 0.6, 0.7, 0.8, or a value falling within a range formed by any two thereof. By adjusting and controlling the conductivity of the inner first electrode plate within the above range, in this case, the current density of the outer electrode plates of the electrode assembly is relatively small during the cycling process, which is conducive to improving the cycle performance of the secondary battery.

In an embodiment of this application, a thickness of the first current collector of the single-sided first electrode plate is T1 $\mu$m. A thickness of the first current collector of the inner first electrode plate is T2 $\mu$m, where T1 $\geq$ T2. In an embodiment of this application, the first electrode plates are positive electrode plates, where $12 \leq T_1 \leq 25$, and $6 \leq T_2 \leq 16$. For example, the value of $T_1$ may be 12, 13, 14, 15, 16, 17, 18, 19, 20, 21, 22, 23, 24, 25, or a value falling within a range formed by any two thereof, and the value of $T_2$ may be 6, 7, 8, 9, 10, 11, 12, 13, 14, 15, 16, or a value falling within a range formed by any two thereof. In an embodiment of this application, the first electrode plates are negative electrode plates, where $14 \leq T_1 \leq 25$, and $4 \leq T_2 \leq 16$. For example, the value of $T_1$ may be 14, 15, 16, 17, 18, 19, 20, 21, 22, 23, 24, 25, or a value falling within a range formed by any two thereof, and the value of $T_2$ may be 4, 5, 6, 7, 8, 9, 10, 11, 12, 13, 14, 15, 16, or a value falling within a range formed by any two thereof. Through the above arrangement, it is conducive to alleviating the problem of warpage caused by a nonuniform stress of the first current collector due to only one surface of the first current collector of the single-sided first electrode plate being provided with a material layer. In this case, double material layers are disposed on the single-sided outer first electrode plate of the electrode assembly, such that the effects of making the conductivity of the single-sided first electrode plate less than or equal to the conductivity of the inner first electrode plate, and reducing the risks of black flecks and lithium plating on the outer electrode plates of the electrode assembly during the cycling process are more significant, and the secondary battery has good cycle performance.

In an embodiment of this application, the housing is an aluminum laminated film. When the aluminum laminated film is selected as the housing, in conjunction with the outer first electrode plates of the electrode assembly being positive electrode plates, it is conducive to reducing the risk of short circuit of the secondary battery, thereby improving the cycle performance and safety performance of the secondary battery.

In this application, when the first electrode plates or the second electrode plates are positive electrode plates, positive current collectors are not particularly limited in this application, as long as the objectives of this application can be achieved. For example, each positive current collector may include aluminum foil, aluminum alloy foil, a composite current collector, e.g., an aluminumcarbon composite current collector, etc.

In an embodiment of this application, the first electrode plates are negative electrode plates. The first material layer includes a first active material. A conductivity of the first active material is c S/cm. The second material layer includes a second active material. A conductivity of the second active material is d S/cm, where c < d. The first active material and the second active material each are at least one independently selected from natural graphite, artificial graphite, mesocarbon microbeads, hard carbon, soft carbon, silicon, or a silicon-carbon complex. When the first electrode plates are negative electrode plates, by disposing double material layers on each outer electrode plate of the electrode assembly, the first active material and the second active material are selected within the above ranges of types, such that the conductivities of the first active material and the second active material are within a suitable range. Compared with outer electrode plates of a conventional electrode assembly, the impedance of the outer electrode plates of the electrode assembly is increased, thereby reducing the current density of the outer electrode plates of the electrode assembly, and reducing the consumption rate of the outer electrolyte solution in the electrode assembly during the cycling process, which is conducive to reducing the risks of black flecks and lithium plating on the outer electrode plates of the electrode assembly during the cycling process, and in turn, improving the cycle performance of the secondary battery.

In an embodiment of this application, the housing is a metal shell. When the metal shell is selected as the housing, in conjunction with the outer first electrode plates of the electrode assembly being negative electrode plates, it is conducive to reducing the risk of short circuit of the secondary battery, thereby improving the cycle performance and safety performance of the secondary battery.

In an embodiment of this application, the first active material layers disposed on the first surface and the second surface of the inner first electrode plate are third material layers. Each third material layer includes a third active material. The third active material includes at least one of natural graphite, artificial graphite, mesocarbon microbeads, hard carbon, soft carbon, silicon, or a silicon-carbon complex. As shown in FIG. 1 and FIG. 2, the first active material layers 12 disposed on the first surface and the second surface of the inner first electrode plate 102 are third material layers 123. By selecting the third active material of the above type, the inner electrode plate of the electrode assembly has a high conductivity, which is conducive to reducing the difference in conductivity between the inner and outer electrode plates of the electrode assembly; while the inner electrode plate of the electrode assembly has a high conductivity, the outer electrode plates of the electrode assembly have a relatively low conductivity, thereby reducing the consumption rate of the outer electrolyte solution in the electrode assembly during the cycling process, which is conducive to reducing the risks of black flecks and lithium plating on the outer electrode plates of the electrode assembly during the cycling process; moreover, the secondary battery has good cycle performance.

In this application, when the first electrode plates or the second electrode plates are negative electrode plates, negative current collectors are not particularly limited in this application, as long as the objectives of this application can be achieved. For example, each negative current collector may include copper foil, copper alloy foil, nickel foil, stainless steel foil, titanium foil, foamed nickel, foamed copper, a composite current collector, e.g., a lithium-copper composite current collector, a carbon-copper composite current collector, a nickel-copper composite current collector, a titanium-copper composite current collector, etc., and so on. In this case, the first material layers, the second material layers, and the third material layers are all negative electrode material layers. Each first material layer further includes a first conductive agent and a first binder. Each second material layer further includes a second conductive agent and a second binder. Each third material layer further includes a third conductive agent and a third binder. The first conductive agent, the second conductive agent and the third conductive agent may be at least one independently selected from conductive carbon black, carbon nanotubes, graphene, or conductive graphite. The first binder, the second binder and the third binder may be at least one independently selected from polyvinylidene difluoride, polyvinylidene chloride, polyvinyl dichloride, aramid, polyamide, polyacrylonitrile, an acrylate polymer, styrene-butadiene rubber, a polyacrylate salt, sodium carboxymethylcellulose, polyvinylpyrrolidone, polyvinyl ether, a pure acrylic emulsion, or polyacrylic acid. In this application, when the first electrode plates are negative electrode plates, the mass ratio of the first active material to the first conductive agent to the first binder, the mass ratio of the second active material to the second conductive agent to the second binder, and the mass ratio of the third active material to the second conductive agent to the third binder may be adjusted and controlled according to actual needs, as long as the objectives of this application can be achieved.

A second aspect of this application provides a preparation method for the secondary battery. The preparation method includes the following steps: preparing the at least one single-sided first electrode plate, the at least one inner first electrode plate, the plurality of second electrode plates, the plurality of separators, the electrolyte solution, and the housing, and assembling same to obtain the secondary battery. A preparation method for the single-sided first electrode plate includes the following steps: disposing the first material layer and the second material layer on the second surface of the first current collector in sequence to obtain the single-sided first electrode plate. A preparation method for the inner first electrode plate includes the following steps: disposing the first active material layers on both the first surface and the second surface of the first current collector to obtain the inner first electrode plate. By using the above preparation method to prepare the secondary battery, it is conducive to process operation and production, the risks of black flecks and lithium plating on the outer electrode plates of the electrode assembly during the cycling process of the obtained secondary battery, and the secondary battery has good cycle performance.

The method for disposing the first material layer and the second material layer on the second surface of the first current collector is not particularly limited in this application, as long as the objectives of this application can be achieved. For example, mixing the first active material, the first binder, and the first conductive agent at a certain mass ratio, adding a solvent to prepare the first material layer slurry, coating the second surface of the first current collector with the first material layer slurry, and performing drying to obtain the first electrode plate coated with the first material layer; and mixing the second active material, the second binder and the second conductive agent at a certain mass ratio, adding a solvent to prepare the second material layer slurry, coating a surface that is of the first material layer and that is away from the first current collector with the second material layer slurry, and performing drying to obtain the single-sided outer first electrode plate coated with the first material layer and the second material layer. The method for obtaining the single-sided first electrode plate is not particularly limited in this application, as long as the objectives of this application can be achieved. For example, after coating the single-sided outer first electrode plate with the first material layer and the second material layer, performing cold-calendering, cutting and welding with a first tab to obtain the single-sided first electrode plate. The solvents and mass contents used in the above first material layer slurry and second material layer slurry are not particularly limited in this application, as long as the objectives of this application can be achieved. The drying temperature and time are not particularly limited in this application and may be selected by a person skilled in the art according to actual needs, as long as the objectives of this application can be achieved. Process parameters of the above cold-calendering, cutting and welding with the first tab are not particularly limited in this application and may be selected by a person skilled in the art according to actual needs, as long as the objectives of this application can be achieved. The sizes of the first material layer and the second material layer are not particularly limited in this application, as long as the objectives of this application can be achieved.

In this application, the mass percents of the first active material, the first binder, and the first conductive agent may be adjusted and controlled by adjusting and controlling the mass ratio of the first active material to the first binder to the first conductive agent in the first material layer slurry; and the mass percents of the second active material, the second binder, and the second conductive agent may be adjusted and controlled by adjusting and controlling the mass ratio of the second active material to the second binder to the second conductive agent in the second material layer slurry.

The method for disposing first active material layers on both the first surface and the second surface of the first current collector, i.e., disposing third material layers on the two surfaces of the first current collector, is not limited in this application, as long as the objectives of this application can be achieved. For example, mixing the third active material, the third binder, and the third conductive agent at a certain mass ratio, and adding a solvent to prepare the third material layer slurry; coating the first surface of the first current collector with the third material layer slurry, and performing drying to obtain the single-sided inner first electrode plate coated with the third material layer; and repeating the above steps on the other surface of the first current collector to obtain the double-sided inner first electrode plate coated with third material layers. The method for obtaining the inner first electrode plate is not particularly limited in this application, as long as the objectives of this application can be achieved. For example, cold-calendering the double-sided inner first electrode plate coated with the third material layers, cutting and welding with a first tab to obtain the inner first electrode plate. The solvent and mass content used in the above third material layer slurry are not particularly limited in this application, as long as the objectives of this application can be achieved. The drying temperature and time are not particularly limited in this application and may be selected by a person skilled in the art according to actual needs, as long as the objectives of this application can be achieved. Process parameters of the above cold-calendering, cutting and welding with the first tab are not particularly limited in this application and may be selected by a person skilled in the art according to actual needs, as long as the objectives of this application can be achieved. The size of the third material layer is not particularly limited in this application, as long as the objectives of this application can be achieved.

In this application, the mass percents of the third active material, the third binder, and the third conductive agent may be adjusted by adjusting and controlling the mass ratio of the third active material to the third binder to the third conductive agent.

The assembly method for a secondary battery is not particularly limited in this application, as long as the objectives of this application can be achieved. For example, stacking an outer first electrode plate, a separator, a second electrode plate, a separator, an inner first electrode plate, a separator, a second electrode plate, a separator, and an outer first electrode plate in sequence, then fixing the four corners of the entire laminated structure well with adhesive tapes to obtain an electrode assembly of a laminated structure, disposing the electrode assembly into a housing, and injecting an electrolyte solution into the housing and sealing to obtain the secondary battery.

In an embodiment of this application, the first material layer includes the first active material. The conductivity of the first active material is a S/cm. The second material layer includes the second active material. The conductivity of the second active material is b S/cm, where a < b. By disposing double material layers on each outer electrode plate of the electrode assembly, and adjusting and controlling the conductivity of the first active material in the first material layer between the second material layer and the first current collector to be less than the conductivity of the second active material in the second material layer, compared with outer electrode plates of a conventional electrode assembly, the impedance of the outer electrode plates of the electrode assembly is increased, thereby reducing the current density of the outer electrode plates of the electrode assembly, and reducing the consumption rate of the outer electrolyte solution in the electrode assembly during the cycling process, which is conducive to reducing the risks of black flecks and lithium plating on the outer electrode plates of the electrode assembly during the cycling process, and in turn, improving the cycle performance of the secondary battery.

In this application, the conductivity of the outer first electrode plate may be adjusted and controlled by adjusting and controlling the conductivities of the first active material and the second active material, and further, the conductivity of the outer first electrode plate may be adjusted and controlled by adjusting and controlling the type and particle size of the first active material and the type and particle size of the second active material. For example, for the same active material, when the particle sizes, i.e., Dv50 and Dv99, of the active material are small, the conductivity of the active material is large. In this application, the conductivity of the inner first electrode plate may be adjusted and controlled by adjusting and controlling the type and mass percent of the third active material. In this application, the conductivities of the outer first electrode plates and/or the inner first electrode plate are also related to the overall thicknesses of the outer first electrode plates and/or the inner first electrode plate, the coating weights of the material layers corresponding thereto, etc. For example, for the inner first electrode plate of the same specification, when other conditions are the same, and the thickness of the inner first electrode plate is relatively small and the coating weight thereof is relatively low, the conductivity of the inner first electrode plate is relatively large.

The electrolyte solution in this application includes a lithium salt and a nonaqueous solvent. The lithium salt may include at least one of $LiPF_6$, $LiNO_3$, $LiBF_4$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalate)borate (LiBOB), lithium bis(trifluoromethanesulfonyl)imide (LiTFSI), or lithium difluoroborate. The content of the lithium salt in the electrolyte solution is not limited in this application, as long as the objectives of this application can be achieved. The nonaqueous solvent is not particularly limited in this application, as long as the objectives of this application can be achieved. For example, the nonaqueous solvent may include, but is not limited to, at least one of a carbonate compound, a carboxylate compound, an ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate, diethyl carbonate, dipropyl carbonate, methyl propyl carbonate, ethylene propylene carbonate, or ethyl methyl carbonate. The above cyclic carbonate compound may include, but is not limited to, at least one of ethylene carbonate, propylene carbonate (PC), butyl carbonate, or vinyl ethylene carbonate. The fluorocarbonate compound may include, but is not limited to, at least one of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decalactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The separator is not particularly limited in this application, as long as the objectives of this application can be achieved. For example, the material of the separator may include, but are not limited to, at least one of polyolefins (PO) dominated by polyethylene (PE) and polypropylene (PP), polyester, e.g., a polyethylene terephthalate (PET) film, cellulose, polyimide (PI), polyamide (PA), spandex, or aramid. The type of the separator may include at least one of a woven film, a non-woven film, a microporous film, a composite film, a calendered film, or a spun film. The separator in this application may be a porous structure. The pore size of the porous structure of the separator is not particularly limited in this application, as long as the objectives of this application can be achieved. For example, the pore size may be 0.01 $\mu$m to 1 $\mu$m. The thickness of the separator is not particularly limited in this application, as long as the objectives of this application can be achieved. For example, the thickness of the separator may be 5 $\mu$m to 40 $\mu$m.

The secondary battery is not particularly limited in this application, and may include any apparatus in which an electrochemical reaction occurs. In one or more embodiments, the secondary battery may include, but is not limited to: a lithium-ion secondary battery, that is, lithium-ion battery, a lithium polymer secondary battery, a lithium-ion polymer secondary battery, etc.

A third aspect of this application provides an electronic device. The electronic device includes the secondary battery disclosed in any one of the preceding embodiments. The secondary battery in this application has good cycle performance. Therefore, the electronic apparatus in this application has a long service life.

The electronic device is not particularly limited herein, and may be any electronic device known in the prior art. The electronic apparatus may include, but is not limited to, a notebook computer, a pen-input computer, a mobile computer, an electronic book player, a portable phone, a portable fax machine, a portable copier, a portable printer, a stereo headset, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, and a lithium-ion capacitor.

**Embodiment**

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

**Test methods and devices:**

**Testing conductivities of electrode plates:**

Disassembling the lithium-ion battery which is discharged at 0.2 C until the voltage reaches 3.0 V, taking out an outer first electrode plate of the electrode assembly, and taking an inner first electrode plate of the electrode assembly according to an arrangement manner of the electrode plates in the electrode assembly, soaking the outer first electrode plate and the inner first electrode plate in dimethyl carbonate (DMC) for 20 min, and then drenching the outer first electrode plate and the inner first electrode plate with DMC and acetone each in turn. After that, putting the outer first electrode plate and the inner first electrode plate in an oven, and baking the outer first electrode plate and the inner first electrode plate at 80 °C for 12 h to obtain samples of the treated outer first electrode plate and inner first electrode plate.

Using a resistance tester, model BER1200, manufactured by Initial Energy Science & Technology Co. Ltd., IEST, to test the treated outer first electrode plate and inner first electrode plate, respectively, before that, performing resistance reset and pressure reset on the resistance tester, then putting electrode plate samples to be tested between electrodes of the tester, taking three electrode plates with cross-sectional areas of 30 mm × 30 mm from different positions on each sample for testing, measuring resistance values of the three electrode plates with the cross-sectional area of 30 mm × 30 mm, respectively, and recording an average value as a resistance numerical value of the electrode plates with the cross-sectional area of 30 mm × 30 mm. And performing calculating according to the following formula:

$$R=\rho\times l/s; \quad \gamma=1/\rho=l/Rs$$

where R represents the measured resistance numerical value; $\rho$ represents a resistivity; and $l$ represents a thickness of the measured electrode plates, s represents a cross-sectional area, and $\gamma$ represents a measured conductivity of the electrode plate.

Obtaining a conductivity A of the outer first electrode plate and a conductivity B of the inner first electrode plate, respectively.

**Testing conductivities of active materials:**

Weighing 1.5 g of a first active material powder sample, using a circular abrasive tool to make the first active material powder sample into cylindrical sheets with a diameter of 10 mm and a thickness of 2 mm at a pressure of 80 MPa, using a powder resistivity & compaction density instrument, model PRCD3100, manufactured by Initial Energy Science & Technology Co. Ltd., IEST, to measure the treated cylindrical sheets, and calculating a conductivity by the following formula:

$$\rho=2\pi l U/I; \quad \gamma=1/\rho$$

where $\rho$ represents a resistivity; and $l$ represents a probe coefficient of the instrument used, U represents a direct current voltage value measured by two inner electrodes of the instrument used, I represents a direct current value applied by the two inner electrodes of the instrument used, and $\gamma$ represents a conductivity of the active material.

Obtaining the conductivity a of the first active material and the conductivity b of the second active material, respectively.

**Testing particle sizes:**

Disassembling the lithium-ion battery which is discharged at 0.2 C until the voltage reaches 3.0 V, taking out an outer first electrode plate of an electrode assembly, soaking the outer first electrode plate in dimethyl carbonate (DMC) for 20 min, and then drenching the outer first electrode plate with DMC and acetone each in turn. After that, putting the outer first electrode plate in an oven, and baking the outer first electrode plate at 80 °C for 12 h to obtain a sample of the treated outer first electrode plate.

Using a scanning electron microscope to observe a cross section of the outer first electrode plate, where a relatively clear coating boundary of double layers may be observed, scrapping off a second material layer with a scraper along the coating boundary of the double layers, and washing the second material layer in dimethyl carbonate (DMC) to obtain a second active material powder sample. Adding particles of the second active material in a 50 ml clean beaker, adding 20 ml of deionized water, and sonicating the mixture for 5 min in a 120 W ultrasonic cleaner to make the particles of the second active material completely dispersed in the deionized water to obtain a sample dispersion solution. Using a particle size analyzer (model: MasterSizer 2000) to test the above sample dispersion solution to obtain particle sizes Dv50 and Dv99 of the second active material.

Scrapping off a first material layer with a scraper, and washing the first material layer in dimethyl carbonate (DMC) to obtain a first active material powder sample. Adding particles of a first active material in a 50 ml clean beaker, adding 20 ml deionized water, and sonicating the mixture for 5 min in a 120 W ultrasonic cleaner to make the particles of the first active material completely dispersed in the deionized water to obtain a sample dispersion solution. Using a particle size analyzer, model MasterSizer 2000, to test the above sample dispersion solution to obtain particle sizes Dv50 and Dv99 of the first active material.

**Testing thicknesses of material layers:**

Disassembling the lithium-ion battery which is discharged at 0.2 C until the voltage reaches 3.0 V, taking out an outer first electrode plate and an inner first electrode plate of the electrode assembly, soaking the outer first electrode plate and the inner first electrode plate in dimethyl carbonate (DMC) for 20 min, and then drenching the outer first electrode plate and the inner first electrode plate with DMC and acetone each in turn. After that, putting the outer first electrode plate and the inner first electrode plate in an oven, and baking the outer first electrode plate and the inner first electrode plate at 80 °C for 12 h to obtain samples of the treated outer first electrode plate and inner first electrode plate.

Performing argon ion polishing on the outer first electrode plate to obtain a cross section of the outer first electrode plate, observing the morphology of the cross section of the outer first electrode plate along a thickness direction by means of a field emission scanning electron microscope (Philips XL-30), and shooting a scanning electron microscope image, and measuring a thickness $H_1$ of a first material layer and a thickness $H_2$ of a second material layer by means of the scanning electron microscope.

Performing argon ion polishing on the inner first electrode plate to obtain a cross section of the inner first electrode plate, observing the morphology of the cross section of the inner first electrode plate along a thickness direction by means of a field emission scanning electron microscope (Philips XL-30), and shooting a scanning electron microscope image, and measuring a thickness $H_3$ of a third material layer by means of the scanning electron microscope.

**Testing lithium plating performance:**

In embodiments and comparative embodiments, putting a lithium-ion battery into a 10 °C thermostat to stand for 60 minutes, charging the lithium-ion battery at a constant current of 2 C until the voltage reaches 4.5 V, charging the lithium-ion battery at a constant voltage of 4.5 V until the current reaches 0.05 C, leaving the lithium-ion battery to stand for 5 minutes, and then discharging the lithium-ion battery at a constant current of 0.5 C until the voltage reaches 3.0 V, thereby completing one cycle. After 100 cycles are performed on the lithium-ion battery according to the above charge-and-discharge process, charging the lithium-ion battery at a constant current of 2 C until the voltage reaches 4.5 V, charging the lithium-ion battery at a constant voltage of 4.5 V until the current reaches 0.05 C, leaving the lithium-ion battery to stand for 5 minutes, and then disassembling the lithium-ion battery, taking out an outer electrode plate of an electrode assembly, and observing the state of lithium plating on the surface of the outer electrode plate, where a region on the surface of the outer electrode plate in which lithium plating does not occur shows a golden yellow color, and a region in which lithium plating occurs shows an off-white color.

The criteria for judging the lithium plating degree of the lithium-ion battery is as follows. The lithium plating area being 0% represents no lithium plating, that is, the lithium plating degree is none; the lithium plating area being greater than 0 and less than or equal to 2% represents slight lithium plating, that is, the lithium plating degree is slight; the lithium plating area being greater than 2% and less than or equal to 20% represents moderate lithium plating, that is, the lithium plating degree is moderate; and the lithium plating area being greater than 20% and less than or equal to 100% represents severe lithium plating, that is, the lithium plating degree is severe, where the percent of the lithium plating area is calculated based on the total area of the first active material layer of the outer first electrode plate.

**Testing black flecks:**

Putting a lithium-ion battery in a 0 °C thermostat to stand for 60 min to make the lithium-ion battery reach a constant temperature. Charging the lithium-ion battery reaching the constant temperature at a constant current of 1 C at 0 °C until the voltage reaches a full-charge voltage of 4.5 V, then charging the lithium-ion battery at a constant voltage of 4.5 V until the current reaches 0.025 C, leaving the lithium-ion battery to stand for 5 min, and then discharging the lithium-ion battery at a constant current of 1 C until the voltage reaches 3.0 V, thereby completing one charge-and-discharge cycle; and after charging and discharging for 500 cycles, charging the lithium-ion battery at a constant current of 1 C until the voltage reaches a full-charge voltage of 4.5 V, and charging the lithium-ion battery at a constant voltage of 4.5 V until the current reaches 0.025 C to obtain a 500th-cycle fully charged battery. Disassembling the lithium-ion battery in a drying room with a humidity of less than 5%, and shooting an image to record whether there are black flecks on the surface of an outer electrode plate.

The criteria for judging the degree of black flecks of the lithium-ion battery is as follows. The area of black flecks being 0% represents no black flecks; the areas of black flecks being less than or equal to 2% represents slight black flecks; the areas of black flecks being 2% to 20% represents moderate black flecks; and the areas of black flecks being greater than 20% represents severe black flecks, where the percent of the areas of black flecks are calculated based on the total area of the first active material layer of the outer first electrode plate.

**Testing the cycle performance:**

Putting the lithium-ion battery in an 25 °C testing thermostat to stand for 30min to make the lithium-ion battery reach a constant-temperature state of 25 °C. Charging the lithium-ion battery at a constant current of 1 C until the voltage reaches 4.5 V, charging the lithium-ion battery at a constant voltage of 4.5 V until the current reaches 0.025 C, leaving the lithium-ion battery to stand for 5 min, discharging the lithium-ion battery at a constant current of 0.2 C until the voltage reaches 3.0 V, thereby completing the first cycle, recording an initial discharge capacity $C_0$. Performing charge-and-discharge cycles on the lithium-ion battery according to the above process until 400 cycles are completed, stopping the test, and recording 400th-cycle discharge capacity $C_1$. Calculating a 400th-cycle capacity retention rate as an indicator for evaluating the cycle performance of the lithium-ion battery.

$$\text{400th-cycle capacity retention rate } (\%) = C_1/C_0 \times 100\%.$$

The higher the 400th-cycle capacity retention rate is, the better the cycle performance of the lithium-ion battery is.

**Embodiment 1-1**

<Preparing first electrode plates>

Selecting positive electrode plates as the first electrode plates, mixing lithium iron phosphate (LFP, Dv50 = 5 $\mu$m, Dv99 = 30 $\mu$m) as the first active material, polyvinylidene difluoride as the first binder, and conductive carbon black as the first conductive agent at a mass ratio of 92: 3: 5, adding N-methyl-pyrrolidone (NMP), and stirring the mixture well with a vacuum mixer to obtain a first material layer slurry in which the solid content is 70 wt%. Mixing lithium manganese oxide (LiMn$_2$O$_4$, Dv50 = 8 $\mu$m, Dv99 = 50 $\mu$m) as the second active material, polyvinylidene difluoride as the second binder, and conductive carbon black as the second conductive agent at a mass ratio of 92: 3: 5, adding N-methyl-pyrrolidone (NMP), and stirring the mixture well with a vacuum mixer to obtain a second material layer slurry in which the solid content is 70 wt%. Coating one surface of a 14-$\mu$m thick positive current collector aluminum foil with the first material layer slurry, and baking the surface of the positive current collector aluminum foil at 120 °C for 1 hour to obtain a positive electrode plate coated with the first material layer. Coating the surface that is of the first material layer and that is away from the positive current collector aluminum foil with the second material layer slurry, and baking the surface of the first material layer at 120 °C for 1 hour to obtain a single-sided outer positive electrode plate coated with the first material layer and the second material layer. Cold-calendering, cutting and welding the single-sided outer positive electrode plate with the positive electrode tab to obtain the outer positive electrode plate of 50 mm × 90 mm in size. A coating weight of the first material layer is 6.5 mg/mm$^2$, and a thickness of the first material layer is 40 $\mu$m. Based on the mass of the first material layer, a mass percent $W_1$ of the first binder is 3%, and a mass percent $W'_1$ of the first conductive agent is 5%. A coating weight of the second material layer is 13 mg/mm$^2$, and a thickness of the second material layer is 80 $\mu$m. Based on the mass of the second material layer, a mass percent $W_2$ of the second binder is 3%, and a mass percent $W'_2$ of the second conductive agent is 5%.

Mixing lithium manganese oxide (LiMn$_2$O$_4$, Dv50 = 8 $\mu$m, Dv99 = 50 $\mu$m) as the third active material, polyvinylidene difluoride as the third binder, and conductive carbon black as the third conductive agent at a mass ratio of 92: 3: 5, adding N-methyl-pyrrolidone (NMP), and stirring the mixture well with a vacuum mixer to obtain a third material layer slurry in which the solid content is 70 wt%. Coating one surface of a 14-$\mu$m thick positive current collector aluminum foil with the third material layer slurry, and baking the surface of the positive current collector aluminum foil at 120 °C for 1 hour to obtain the positive electrode plate coated with the third material layer. Repeating the above steps on the other surface of the positive current collector aluminum foil to obtain the positive electrode plate coated with third material layers on both sides. Then drying the positive electrode plate at 120 °C for 1 hour under a vacuum condition. Cold-calendering, cutting and welding the positive electrode plate with the positive electrode tab to obtain the inner positive electrode plate of 50 mm ×90 mm in size. A coating weight of the third material layer is 18 mg/mm$^2$, and a thickness of the third material layer is 160 μm. Based on the mass of the third material layer, a mass percent W"$_3$ of the third active material is 92%.

<Preparing second electrode plates>

Selecting negative electrode plates as the second electrode plates, mixing artificial graphite as the negative active material, conductive carbon black, and styrene-butadiene rubber as the negative electrode binder at a mass ratio of 94: 2: 4, adding deionized water, and stirring the mixture well with a vacuum mixer to obtain a negative electrode slurry in which the solid content is 65 wt%. Uniformly coating one surface of a 12-μm thick negative current collector copper foil with the negative electrode slurry, and baking the surface of the negative current collector copper foil at 120 °C for 1 hour to obtain the negative electrode plate coated with the negative electrode material layer on a single side. Repeating the above steps on the other surface of the negative current collector copper foil to obtain the negative electrode plate coated with negative electrode material layers on both sides. Then drying the negative electrode plate at 120 °C for 1 hour under a vacuum condition. Cold-calendering, cutting and welding the negative electrode plate with the negative tab to obtain the negative electrode plate of 50 mm × 90 mm in size. A coating weight of the negative electrode material layer is 12 mg/mm$^2$, and a thickness of the negative electrode material layer is 120 μm.

<Preparing an electrolyte solution>

In a dry argon atmosphere glove box, mixing ethylene carbonate (EC), propylene carbonate (PC), and diethyl carbonate (DEC) at a mass ratio of 1: 1: 1 to obtain an organic solvent. Dissolving a lithium salt LiPF$_6$ in the above organic solvent, then adding fluoroethylene carbonate (FEC), and stirring well to obtain the electrolyte solution. Based on the total mass of the electrolyte solution, a mass percent of LiPF6 is 12.5%, a mass percent of FEC is 5%, and the balance is the organic solvent.

<Separator>

Using a 7-μm thick polyethylene (PE) film as the separator.

<Preparing a lithium-ion battery>

Stacking the above prepared outer positive electrode plate, separator, negative electrode plate, separator, inner positive electrode plate, separator, negative electrode plate, separator, and outer positive electrode plate in sequence, then fixing the four corners of the entire laminated structure well with adhesive tapes to obtain an electrode assembly of a laminated structure, putting the electrode assembly into an aluminum laminated film, putting the aluminum laminated film in a 80 °C vacuum oven, and drying the aluminum laminated film for 12 hours for dehydrating, injecting the above prepared electrolyte solution, and performing steps such as vacuum packaging, standing, chemical formation, degassing, and edge trimming to obtain the lithium-ion battery. A designed potential interval of the lithium-ion battery is 3.0 V to 4.5 V.

**Embodiment 1-2 to Embodiment 1-29**

Identical to Embodiment 1-1 except that the relevant preparation parameters are adjusted according to Table 1. When Dv50 and Dv99 of the same active material change, the grinding time is adjusted so that values of Dv50 and Dv99 of the active material are shown in Table 1. When the thicknesses of the material layers change, the coating weights are adjusted so that the thicknesses of the material layers are shown in Table 1. When the type and/or Dv50 and Dv99 of the second active material change, the type and/or Dv50 and Dv99 of the third active material change accordingly.

**Embodiment 2-1**

Identical to Embodiment 1-1 except that the positive electrode plates, the negative electrode plate and the lithium-ion battery are prepared according to the following steps, and relevant preparation parameters are adjusted according to Table 3.

<Preparing first electrode plates>

Selecting negative electrode plates as the first electrode plates, mixing artificial graphite as the first active material, styrene-butadiene rubber as the first binder, and conductive carbon black as the first conductive agent at a mass ratio of 92: 3: 5, adding deionized water, and stirring the mixture well with a vacuum mixer to obtain a first material layer slurry in which the solid content is 65 wt%. Mixing a silicon-carbon complex SiC as the second active material, styrene-butadiene rubber as the second binder, and conductive carbon black as the second conductive agent at a mass ratio of 92: 3: 5, adding deionized water, and stirring the mixture well with a vacuum mixer to obtain a second material layer slurry in which the solid content is 65 wt%. Coating one surface of a 12-$\mu$m thick negative current collector copper foil with the first material layer slurry, and baking the surface of the negative current collector copper foil at 120 °C for 1 hour to obtain the negative electrode plate coated with the first material layer. Coating the surface that is of the first material layer and that is away from the negative current collector copper foil with the second material layer slurry, and baking the surface of the first material layer at 120 °C for 1 hour to obtain the single-sided outer negative electrode plate coated with the first material layer and the second material layer. Cold-calendering, cutting and welding the single-sided outer negative electrode plate with the negative tab to obtain the outer negative electrode plate of 50 mm $\times$ 90 mm in size. A coating weight of the first material layer is 4 mg/mm$^2$, and a thickness of the first material layer is 40 $\mu$m. Based on the mass of the first material layer, a mass percent $W_1$ of the first binder is 3%, and a mass percent $W'_1$ of the first conductive agent is 5%. A coating weight of the second material layer is 12 mg/mm$^2$, and a thickness of the second material layer is 80 $\mu$m. Based on the mass of the second material layer, a mass percent $W_2$ of the second binder is 3%, and a mass percent $W'_2$ of the second conductive agent is 5%.

Mixing a silicon-carbon complex SiC as the third active material, styrene-butadiene rubber as the third binder, and conductive carbon black as the third conductive agent at a mass ratio of 92: 3: 5, adding deionized water, and stirring the mixture well with a vacuum mixer to obtain a third material layer slurry in which the solid content is 65 wt%. Coating one surface of a 12-$\mu$m thick negative current collector copper foil with the third material layer slurry, and baking the surface of the negative current collector copper foil at 120 °C for 1 hour to obtain the negative electrode plate coated with the third material layer. Repeating the above steps on the other surface of the negative current collector copper foil to obtain the negative electrode plate coated with third material layers on both sides. Then drying the negative electrode plate at 120 °C for 1 hour under a vacuum condition. Cold-calendering, cutting and welding the negative electrode plate with the negative tab to obtain the inner negative electrode plate of 50 mm $\times$ 90 mm in size. A coating weight of the third material layer is 14 mg/mm$^2$, and a thickness of the third material layer is 160 $\mu$m. Based on the mass of the third material layer, a mass percent $W''_3$ of the third active material is 92%.

<Preparing second electrode plates>

Selecting positive electrode plates as the second electrode plates, mixing lithium manganese oxide ($LiMn_2O_4$) as the positive active material, polyvinylidene difluoride as the binder, and conductive carbon black as the conductive agent at a mass ratio of 92: 3: 5, adding N-methyl-pyrrolidone (NMP), and stirring the mixture well with a vacuum mixer to obtain a positive electrode slurry in which the solid content is 70 wt%. Uniformly coating one surface of a 14-$\mu$m thick positive current collector aluminum foil with the positive electrode slurry, and baking the surface of the positive current collector aluminum foil at 120 °C for 1 hour to obtain the positive electrode plate coated with the positive electrode material layer on a single side. Repeating the above steps on the other surface of the positive current collector aluminum foil to obtain the positive electrode plate coated with positive electrode material layers on both sides. Then drying the positive electrode plate at 120 °C for 1 hour under a vacuum condition. Cold-calendering, cutting and welding the positive electrode plate with the positive electrode tab to obtain the positive electrode plate of 50 mm $\times$ 90 mm in size. A coating weight of the positive electrode material layer is 19 mg/mm$^2$, and a thickness of the positive electrode material layer is 180 $\mu$m.

<Preparing a lithium-ion battery>

Stacking the above prepared outer negative electrode plate, separator, positive electrode plate, separator, inner negative electrode plate, separator, positive electrode plate, separator, and outer negative electrode plate in sequence, then fixing the four corners of the entire laminated structure well with adhesive tapes to obtain an electrode assembly of a laminated structure, putting the electrode assembly into a metal shell, putting the metal shell in a 80 °C vacuum oven, and drying the metal shell for 12 hours for dehydrating, injecting the above prepared electrolyte solution, and performing steps such as vacuum packaging, standing, chemical formation, degassing, and edge trimming to obtain the lithium-ion battery. A designed potential interval of the lithium-ion battery is 3.0 V to 4.5 V.

**Embodiment 2-2 to Embodiment 2-4**

Identical to Embodiment 2-1 except that the relevant preparation parameters are adjusted according to Table 3.

**Comparative Embodiment 1 and Comparative Embodiment 2**

Identical to Embodiment 1-1 except that the first material layer is not disposed on the outer positive electrode plate, only the second material layer is disposed on the outer positive electrode plate, and relevant preparation parameters are adjusted according to Table 1.

**Comparative Embodiment 3**

Identical to Embodiment 1-1 except that the relevant preparation parameters are adjusted according to Table 1.
The preparation parameters and performance parameters of the embodiments and the comparative embodiments are shown in Table 1 to Table 3.

Table 1

| | Type of first active material | Dv50 of first active material | Dv99 of first active material | a(S/cm) | Type of first binder | $W_1$(%) | Type of first conductive agent | $W'_1$(%) | $H_1$(μm) | Type of second active material | Dv50 of second active material | Dv59 of second active material | b(S/cm) | Type of second binder | $W_2$(%) | Type of second conductive agent | $W'_2$(%) | $H_2$(μm) | Type of third active material | $W''_1$(%) | $H_3$(μm) |
|---|---|---|---|---|---|---|---|---|---|---|---|---|---|---|---|---|---|---|---|---|---|
| Embodiment 1-1 | LFP | 5 | 30 | $3\times10^{-6}$ | Polyvinylidene difluoride | 3 | Conductive carbon black | 5 | 40 | $LiMn_2O_4$ | 8 | 50 | $1\times10^{-4}$ | Polyvinylidene difluoride | 3 | Conductive carbon black | 5 | 80 | $LiMn_2O_4$ | 92 | 160 |
| Embodiment 1-2 | LFP | 8 | 45 | $1\times10^{-9}$ | Polyvinylidene difluoride | 3 | Conductive carbon black | 5 | 40 | NCM811 | 15 | 55 | $6\times10^{-3}$ | Polyvinylidene difluoride | 3 | Conductive carbon black | 5 | 80 | NCM811 | 92 | 160 |
| Embodiment 1-3 | LFP | 5 | 30 | $3\times10^{-8}$ | Polyvinylidene difluoride | 3 | Conductive carbon black | 5 | 40 | NCM622 | 8 | 50 | $3\times10^{-3}$ | Polyvinylidene difluoride | 3 | Conductive carbon black | 5 | 80 | NCM622 | 92 | 160 |
| Embodiment 1-4 | LFP | 5 | 30 | $3\times10^{-6}$ | Polyvinylidene difluoride | 3 | Conductive carbon black | 5 | 40 | $Li_2MnO_3 \cdot LiMnO_2$ | 10 | 60 | $4\times10^{-5}$ | Polyvinylidene difluoride | 3 | Conductive carbon black | 5 | 80 | $Li_2MnO_3 \cdot LiMnO_2$ | 92 | 160 |
| Embodiment 1-5 | LMFP | 10 | 40 | $5\times10^{-5}$ | Polyvinylidene difluoride | 3 | Conductive carbon black | 5 | 40 | $LiMn_2O_4$ | 8 | 50 | $1\times10^{-4}$ | Polyvinylidene difluoride | 3 | Conductive carbon black | 5 | 80 | $LiMn_2O_4$ | 92 | 160 |
| Embodiment 1-6 | LMFP | 10 | 40 | $5\times10^{-5}$ | Polyvinylidene difluoride | 3 | Conductive carbon black | 5 | 40 | $LiCoO_2$ | 5 | 45 | $4\times10^{-3}$ | Polyvinylidene difluoride | 3 | Conductive carbon black | 5 | 80 | $LiCoO_2$ | 92 | 160 |
| Embodiment 1-7 | LMFP | 10 | 40 | $5\times10^{-6}$ | Polyvinylidene difluoride | 3 | Conductive carbon black | 5 | 40 | $LiNiO_2$ | 6 | 50 | $1\times10^{-5}$ | Polyvinylidene difluoride | 3 | Conductive carbon black | 5 | 80 | $LiNiO_2$ | 92 | 160 |
| Embodiment 1-8 | LMFP | 10 | 40 | $5\times10^{-5}$ | Polyvinylidene difluoride | 3 | Conductive carbon black | 5 | 40 | NCM811 | 15 | 55 | $6\times10^{-3}$ | Polyvinylidene difluoride | 3 | Conductive carbon black | 5 | 80 | NCM811 | 92 | 160 |
| Embodiment 1-9 | LMFP | 10 | 40 | $5\times10^{-5}$ | Polyvinylidene difluoride | 3 | Conductive carbon black | 5 | 40 | NCM111 | 6 | 55 | $3\times10^{-3}$ | Polyvinylidene difluoride | 3 | Conductive carbon black | 5 | 80 | NCM111 | 92 | 160 |
| Embodiment 1-10 | LMFP | 10 | 40 | $5\times10^{-5}$ | Polyvinylidene difluoride | 3 | Conductive carbon black | 5 | 40 | $Li_2MnO_3 \cdot LiMnO_2$ | 8 | 50 | $4\times10^{-5}$ | Polyvinylidene difluoride | 3 | Conductive carbon black | 5 | 80 | $Li_2MnO_3 \cdot LiMnO_2$ | 92 | 160 |
| Embodiment 1-11 | $LiMn_2O_4$ | 8 | 50 | $1\times10^{-8}$ | Polyvinylidene difluoride | 3 | Conductive carbon black | 5 | 40 | NCM811 | 15 | 55 | $6\times10^{-3}$ | Polyvinylidene difluoride | 3 | Conductive carbon black | 5 | 80 | NCM811 | 92 | 160 |
| Embodiment 1-12 | $LiMn_2O_4$ | 8 | 50 | $1\times10^{-8}$ | Polyvinylidene difluoride | 3 | Conductive carbon black | 5 | 40 | NCM622 | 8 | 50 | $3\times10^{-3}$ | Polyvinylidene difluoride | 3 | Conductive carbon black | 5 | 80 | NCM622 | 92 | 160 |
| Embodiment 1-13 | $LiMn_2O_4$ | 8 | 50 | $1\times10^{-8}$ | Polyvinylidene difluoride | 3 | Conductive carbon black | 5 | 40 | NCM111 | 6 | 55 | $3\times10^{-3}$ | Polyvinylidene difluoride | 3 | Conductive carbon black | 5 | 80 | NCM111 | 92 | 160 |
| Embodiment 1-14 | LFP | 5 | 30 | $3\times10^{-6}$ | Polyvinyl dichloride | 3 | Conductive carbon black | 5 | 40 | $LiMn_2O_4$ | 8 | 50 | $1\times10^{-4}$ | Polyvinyl dichloride | 3 | Conductive carbon black | 5 | 80 | $LiMn_2O_4$ | 92 | 160 |
| Embodiment 1-15 | LFP | 5 | 30 | $3\times10^{-6}$ | Polyacrylic acid | 3 | Conductive carbon black | 5 | 40 | $LiMn_2O_4$ | 8 | 50 | $1\times10^{-4}$ | Polyacrylic acid | 3 | Conductive carbon black | 5 | 80 | $LiMn_2O_4$ | 92 | 160 |
| Embodiment 1-16 | LFP | 5 | 30 | $3\times10^{-6}$ | Polyvinylidene difluoride | 0.50 | Conductive carbon black | 5 | 40 | $LiMn_2O_4$ | 8 | 50 | $1\times10^{-4}$ | Polyvinylidene difluoride | 0.40 | Conductive carbon black | 5 | 80 | $LiMn_2O_4$ | 98.60 | 160 |
| Embodiment 1-17 | LFP | 5 | 30 | $3\times10^{-6}$ | Polyvinylidene difluoride | 5 | Conductive carbon black | 5 | 40 | $LiMn_2O_4$ | 8 | 50 | $1\times10^{-4}$ | Polyvinylidene difluoride | 5 | Conductive carbon black | 5 | 80 | $LiMn_2O_4$ | 90 | 160 |

| Embodiment 1-18 | LFP | 5 | 30 | 3×10⁻⁹ | Polyvinylidene difluoride | 3 | Conductive graphite | 5 | 40 | LiMn₂O₄ | 8 | 50 | 1×10⁻⁸ | Polyvinylidene difluoride | 3 | Conductive graphite | 5 | 80 | LiMn₂O₄ | 92 | 160 |
|---|---|---|---|---|---|---|---|---|---|---|---|---|---|---|---|---|---|---|---|---|---|
| Embodiment 1-19 | LFP | 5 | 30 | 3×10⁻⁹ | Polyvinylidene difluoride | 3 | Carbon nanotube | 5 | 40 | LiMn₂O₄ | 8 | 50 | 1×10⁻⁸ | Polyvinylidene difluoride | 3 | Carbon nanotube | 5 | 80 | LiMn₂O₄ | 92 | 160 |
| Embodiment 1-20 | LFP | 5 | 30 | 3×10⁻⁹ | Polyvinylidene difluoride | 3 | Conductive carbon black | 1 | 40 | LiMn₂O₄ | 8 | 50 | 1×10⁻⁸ | Polyvinylidene difluoride | 3 | Conductive carbon black | 1 | 80 | LiMn₂O₄ | 96 | 160 |
| Embodiment 1-21 | LFP | 5 | 30 | 3×10⁻⁹ | Polyvinylidene difluoride | 3 | Conductive carbon black | 10 | 40 | LiMn₂O₄ | 8 | 50 | 1×10⁻⁸ | Polyvinylidene difluoride | 3 | Conductive carbon black | 10 | 80 | LiMn₂O₄ | 87 | 160 |
| Embodiment 1-22 | LFP | 5 | 30 | 3×10⁻⁹ | Polyvinylidene difluoride | 3 | Conductive carbon black | 5 | 20 | LiMn₂O₄ | 8 | 50 | 1×10⁻⁸ | Polyvinylidene difluoride | 3 | Conductive carbon black | 5 | 80 | LiMn₂O₄ | 92 | 160 |
| Embodiment 1-23 | LFP | 5 | 30 | 3×10⁻⁹ | Polyvinylidene difluoride | 3 | Conductive carbon black | 5 | 60 | LiMn₂O₄ | 8 | 50 | 1×10⁻⁸ | Polyvinylidene difluoride | 3 | Conductive carbon black | 5 | 80 | LiMn₂O₄ | 92 | 160 |
| Embodiment 1-24 | LFP | 5 | 30 | 3×10⁻⁹ | Polyvinylidene difluoride | 3 | Conductive carbon black | 5 | 40 | LiMn₂O₄ | 8 | 50 | 1×10⁻⁸ | Polyvinylidene difluoride | 3 | Conductive carbon black | 5 | 20 | LiMn₂O₄ | 92 | 160 |
| Embodiment 1-25 | LFP | 5 | 30 | 3×10⁻⁹ | Polyvinylidene difluoride | 3 | Conductive carbon black | 5 | 40 | LiMn₂O₄ | 8 | 50 | 1×10⁻⁸ | Polyvinylidene difluoride | 3 | Conductive carbon black | 5 | 150 | LiMn₂O₄ | 92 | 160 |
| Embodiment 1-26 | LFP | 5 | 30 | 3×10⁻⁹ | Polyvinylidene difluoride | 3 | Conductive carbon black | 5 | 40 | LiMn₂O₄ | 8 | 50 | 1×10⁻⁸ | Polyvinylidene difluoride | 3 | Conductive carbon black | 5 | 80 | LiMn₂O₄ | 92 | 80 |
| Embodiment 1-27 | LFP | 5 | 30 | 3×10⁻⁹ | Polyvinylidene difluoride | 3 | Conductive carbon black | 5 | 40 | LiMn₂O₄ | 8 | 50 | 1×10⁻⁸ | Polyvinylidene difluoride | 3 | Conductive carbon black | 5 | 80 | LiMn₂O₄ | 92 | 250 |
| Embodiment 1-28 | LFP | 23 | 62 | 6×10⁻¹⁰ | Polyvinylidene difluoride | 3 | Conductive carbon black | 5 | 40 | LiMn₂O₄ | 24.5 | 65 | 7×10⁻⁸ | Polyvinylidene difluoride | 3 | Conductive carbon black | 5 | 80 | LiMn₂O₄ | 92 | 250 |
| Embodiment 1-29 | LFP | 3 | 10 | 5×10⁻⁹ | Polyvinylidene difluoride | 3 | Conductive carbon black | 5 | 40 | LiMn₂O₄ | 4.5 | 45 | 3×10⁻⁸ | Polyvinylidene difluoride | 3 | Conductive carbon black | 5 | 80 | LiMn₂O₄ | 92 | 250 |
| Comparative Embodiment 1 | / | / | / | / | Polyvinylidene difluoride | / | Conductive carbon black | / | / | LiMn₂O₄ | 8 | 50 | 1×10⁻⁸ | Polyvinylidene difluoride | 3 | Conductive carbon black | 5 | 80 | LiMn₂O₄ | 92 | 160 |
| Comparative Embodiment 2 | / | / | / | / | Polyvinylidene difluoride | / | Conductive carbon black | / | / | NCM811 | 15 | 55 | 6×10⁻³ | Polyvinylidene difluoride | 3 | Conductive carbon black | 5 | 80 | NCM811 | 92 | 160 |
| Comparative Embodiment 3 | LiMn₂O₄ | 8 | 50 | 1×10⁻⁸ | Polyvinylidene difluoride | 3 | Conductive carbon black | 5 | 80 | LFP | 5 | 30 | 3×10⁻⁹ | Polyvinylidene difluoride | 3 | Conductive carbon black | 5 | 80 | LFP | 92 | 160 |

Note: "/" in Table 1 indicates that the relevant preparation parameter is not present.

Table 2

| | A(S/cm) | B(S/cm) | A/B | Lithium plating area (%) | Areas of black flecks (%) | 400th-cycle capacity retention rate (%) |
|---|---|---|---|---|---|---|
| Embodiment 1-1 | 0.065 | 0.087 | 0.747 | 0 | 0 | 90.5 |
| Embodiment 1-2 | 0.118 | 0.209 | 0.565 | 0 | 0 | 89.4 |
| Embodiment 1-3 | 0.12 | 0.174 | 0.690 | 0 | 0 | 90.1 |
| Embodiment 1-4 | 0.071 | 0.096 | 0.740 | 0 | 0 | 89.2 |
| Embodiment 1-5 | 0.069 | 0.087 | 0.793 | 0 | 0 | 90.8 |
| Embodiment 1-6 | 0.073 | 0.096 | 0.760 | 0 | 0 | 91.2 |
| Embodiment 1-7 | 0.104 | 0.158 | 0.658 | 0 | 0 | 89.6 |
| Embodiment 1-8 | 0.138 | 0.209 | 0.660 | 0 | 0 | 89.2 |
| Embodiment 1-9 | 0.126 | 0.189 | 0.667 | 0 | 0 | 89.8 |
| Embodiment 1-10 | 0.072 | 0.096 | 0.75 | 0 | 0 | 89.1 |
| Embodiment 1-11 | 0.141 | 0.209 | 0.675 | 0 | 0 | 88.9 |
| Embodiment 1-12 | 0.135 | 0.174 | 0.776 | 0 | 0 | 90.2 |
| Embodiment 1-13 | 0.129 | 0.189 | 0.683 | 0 | 0 | 89.9 |
| Embodiment 1-14 | 0.056 | 0.087 | 0.644 | 0 | 0 | 89.5 |
| Embodiment 1-15 | 0.059 | 0.087 | 0.678 | 0 | 0 | 89.9 |
| Embodiment 1-16 | 0.069 | 0.098 | 0.704 | 0 | 0 | 91.1 |
| Embodiment 1-17 | 0.046 | 0.076 | 0.605 | 0 | 0 | 88.7 |

(continued)

|  | A(S/cm) | B(S/cm) | A/B | Lithium plating area (%) | Areas of black flecks (%) | 400th-cycle capacity retention rate (%) |
|---|---|---|---|---|---|---|
| Embodiment 1-18 | 0.065 | 0.087 | 0.747 | 0 | 0 | 90.6 |
| Embodiment 1-19 | 0.08 | 0.087 | 0.920 | 0 | 0 | 91.2 |
| Embodiment 1-20 | 0.023 | 0.065 | 0.354 | 0.5 | 1.2 | 87.2 |
| Embodiment 1-21 | 0.102 | 0.145 | 0.703 | 0 | 0 | 92.2 |
| Embodiment 1-22 | 0.078 | 0.087 | 0.897 | 0 | 0 | 89.7 |
| Embodiment 1-23 | 0.056 | 0.087 | 0.644 | 0 | 0 | 90.2 |
| Embodiment 1-24 | 0.075 | 0.087 | 0.862 | 0 | 0 | 88.5 |
| Embodiment 1-25 | 0.045 | 0.087 | 0.517 | 0 | 0 | 87.6 |
| Embodiment 1-26 | 0.065 | 0.126 | 0.516 | 0 | 0 | 87.5 |
| Embodiment 1-27 | 0.065 | 0.079 | 0.823 | 0 | 0 | 91.6 |
| Embodiment 1-28 | 0.035 | 0.064 | 0.547 | 0 | 0 | 87.9 |
| Embodiment 1-29 | 0.079 | 0.096 | 0.823 | 0 | 0 | 91.2 |
| Comparative Embodiment 1 | 0.12 | 0.087 | 1.379 | 8 | 25 | 75.2 |
| Comparative Embodiment 2 | 0.245 | 0.209 | 1.172 | 11 | 46 | 71.6 |
| Comparative Embodiment 3 | 0.08 | 0.045 | 1.778 | 14 | 49 | 70.5 |

As can be seen from Embodiment 1-1 to Embodiment 1-29, and Comparative Embodiment 1 to Comparative Embodiment 3, by adjusting and controlling the conductivity of the single-sided first electrode plate to be less than or equal to the conductivity of the inner first electrode plate, a lithium plating area and areas of black flecks of the outer electrode plates of the electrode assembly are relatively small, and the 400th-cycle capacity retention rate of the lithium-ion battery is improved, which indicates that the lithium-ion battery in this application can reduce the risks of black flecks and lithium plating on the outer electrode plates of the electrode assembly during the cycling process, and the lithium-ion battery has good cycle performance. In Comparative Embodiment 1 and Comparative Embodiment 2, only the second material layer is only disposed on the outer single-sided first electrode plate. The parameters of the first material layer and the second material layer in Comparative Embodiment 3 are exactly opposite to those of the first material layer and the second material layer in Embodiment 1-1, and the parameters of the third material layer in Comparative Embodiment 3 are the same as those of the second material layer. In Comparative Embodiment 1 to Comparative Embodiment 3, the lithium plating area and the areas of black flecks of the lithium-ion battery are larger, and a 400th-cycle capacity retention rate thereof is lower. Whereas, in Embodiment 1-1 to Embodiment 1-29, the lithium plating area and the areas of black flecks of the outer first electrode plates of the lithium-ion battery are relatively small, and the 400th-cycle capacity retention rate thereof is relatively high, which indicates that the risks of black flecks and lithium plating on the outer electrode plates of the electrode assembly during the cycling process are low, and the lithium-ion battery has good cycle performance.

The types of the first active material and the second active material usually affect the cycle performance of the lithium-ion battery. As can be seen from Embodiment 1-1 to Embodiment 1-13, when the first active material and the second active material within the ranges of this application are selected, the lithium plating area and areas of black flecks of the outer first electrode plate in the lithium-ion battery are relatively small, and the 400th-cycle capacity retention rate thereof is relatively high, which indicates that the risks of black flecks and lithium plating on the outer electrode plates of the electrode assembly during the cycling process are relatively low, and the lithium-ion battery has good cycle performance.

Dv50 and Dv99 of the first active material and Dv50 and Dv99 of the second active material usually affect the cycle performance of the lithium-ion battery. As can be seen from Embodiment 1-1 to Embodiment 1-13, Embodiment 1-28 and Embodiment 1-29, when Dv50 and Dv99 of the first active material and Dv50 and Dv99 of the second active material are within the ranges of this application, the lithium plating area and areas of black flecks of the outer first electrode plate in the lithium-ion battery are relatively small, and the 400th-cycle capacity retention rate thereof is relatively high, which indicates that the risks of black flecks and lithium plating on the outer electrode plates of the electrode assembly during the cycling process are low, and the lithium-ion battery has good cycle performance.

The type and content of the first binder and the type and content of the second binder usually affect the cycle performance of the lithium-ion battery. As can be seen from Embodiment 1-1, and Embodiment 1-14 to Embodiment 1-17, when the first binder and the second binder within the ranges of this application are selected, and the content of the first binder and the content of the second binder are adjusted and controlled within the ranges of this application, the lithium plating area and areas of black flecks of the outer first electrode plate in the lithium-ion battery are relatively small, and the 400th-cycle capacity retention rate thereof is relatively high, which indicates that the risks of black flecks and lithium plating on the outer electrode plates of the electrode assembly during the cycling process are low, and the lithium-ion battery has good cycle performance.

The type and content of the first conductive agent and the type and content of the second conductive agent usually affect the cycle performance of the lithium-ion battery. As can be seen from Embodiment 1-1, and Embodiment 1-18 to Embodiment 1-21, when the first conductive agent and the second conductive agent within the ranges of this application are selected, and the content of the first conductive agent and the content of the second conductive agent are adjusted and controlled within the ranges of this application, the lithium plating area and areas of black flecks of the outer first electrode plate in the lithium-ion battery are relatively small, and the 400th-cycle capacity retention rate thereof is relatively high, which indicates that the risks of black flecks and lithium plating on the outer electrode plates of the electrode assembly during the cycling process are low, and the lithium-ion battery has good cycle performance.

The type and content of the third active material usually affect the cycle performance of the lithium-ion battery. As can be seen from Embodiment 1-1 to Embodiment 1-13, when the third active material within the range of this application is selected, and the content of the third active material is adjusted and controlled within the range of this application, the lithium plating area and areas of black flecks of the outer first electrode plate in the lithium-ion battery are relatively small, and the 400th-cycle capacity retention rate thereof is relatively high, which indicates that the risks of black flecks and lithium plating on the outer electrode plates of the electrode assembly during the cycling process are low, and the lithium-ion battery has good cycle performance.

The thickness of the first material layer and the thickness of the second material layer usually affect the cycle performance of the lithium-ion battery. As can be seen from Embodiment 1-1, and Embodiment 1-22 to Embodiment 1-25, when the thickness of the first material layer and the thickness of the second material layer are adjusted and controlled within the ranges of this application, the lithium plating area and areas of black flecks of the outer first electrode plate in the lithium-ion battery are relatively small, and the 400th-cycle capacity retention rate thereof is relatively high, which indicates that the risks of black flecks and lithium plating on the outer electrode plates of the electrode assembly during the cycling process are low, and the lithium-ion battery has good cycle performance.

The thickness of the third material layer usually affects the cycle performance of the lithium-ion battery. As can be seen from Embodiment 1-1, and Embodiment 1-26 to Embodiment 1-27, when the thickness of the third material layer is adjusted and controlled within the range of this application, the lithium plating area and areas of black flecks of the outer first electrode plate in the lithium-ion battery are relatively small, and the 400th-cycle capacity retention rate thereof is relatively high, which indicates that the risks of black flecks and lithium plating on the outer electrode plates of the electrode assembly during the cycling process are low, and the lithium-ion battery has good cycle performance.

Table 3

| | | A(S/cm) | B(S/cm) | A/B | Type of first active material | c(S/cm) | Type of second active material | d(S/cm) | Lithium plating area (%) | Areas of black flecks (%) | 400th-cycle capacity retention rate (%) |
|---|---|---|---|---|---|---|---|---|---|---|---|
| | Embodiment 1-1 | 0.065 | 0.087 | 0.747 | LFP | $3\times10^{-9}$ | $LiMn_2O_4$ | $1\times10^{-8}$ | 0 | 0 | 90.5 |
| | Embodiment 2-1 | 2.8 | 3.8 | 0.737 | Artificial graphite | $5\times10^{-3}$ | SiC | $8\times10^{-2}$ | 0 | 0 | 88.5 |
| | Embodiment 2-2 | 1.9 | 3.8 | 0.5 | Artificial graphite | $5\times10^{-3}$ | Hard carbon | $5\times10^{-2}$ | 0 | 0 | 86.4 |
| | Embodiment 2-3 | 2.6 | 3.8 | 0.684 | Artificial graphite | $5\times10^{-3}$ | Natural graphite | $5\times10^{-2}$ | 0 | 0 | 88.3 |

(continued)

| | A(S/cm) | B(S/cm) | A/B | Type of first active material | c(S/cm) | Type of second active material | d(S/cm ) | Lithium plating area (%) | Areas of black flecks (%) | 400th-cycle capacity retention rate (%) |
|---|---|---|---|---|---|---|---|---|---|---|
| Embodiment 2-4 | 2.1 | 3.8 | 0.553 | Natural graphite | $5\times10^{-2}$ | SiC | $8\times10^{-2}$ | 0 | 0 | 87.5 |

The type of the first electrode plates usually affect the cycle performance of the lithium-ion battery. As can be seen from Embodiment 1-1 and Embodiment 2-1, when the first electrode plates are positive electrode plates or negative electrode plates, the lithium plating area and areas of black flecks of the outer first electrode plate in the lithium-ion battery are relatively small, and the 400th-cycle capacity retention rate thereof is relatively high, which indicates that the risks of black flecks and lithium plating on the outer electrode plates of the electrode assembly during the cycling process are low, and the lithium-ion battery has good cycle performance.

When the first electrode plates are negative electrode plates, the type of the first active material and the type of the second active material usually affect the cycle performance of the lithium-ion battery. As can be seen from Embodiment 1-1, and Embodiment 2-1 to Embodiment 2-4, when the first active material and the second active material within the ranges of this application are selected, the outer first electrode plate in the lithium-ion battery has a small lithium plating area and area of black flecks, and has a high 400th-cycle capacity retention rate, which indicates that the risks of black flecks and lithium plating on the outer electrode plates of the electrode assembly during the cycling process are low, and the lithium-ion battery has good cycle performance.

It is hereby noted that the relational terms herein such as first and second are used only to differentiate an entity or operation from another entity or operation, and do not require or imply any actual relationship or sequence between the entities or operations. Moreover, the terms "include", "comprise", or any other variation thereof are intended to cover non-exclusive inclusion, so that a process, method or object that includes a series of elements includes not only those elements, but also other elements that are not expressly listed, or further includes elements inherent to such process, method or object.

The embodiments of this specification use relevant manners for description. The same or similar parts of the embodiments may refer to each other, and each embodiment highlights the differences from other embodiments.

What is described above is merely exemplary embodiments of this application, but is not intended to limit this application. Any modifications, equivalent replacements, improvements, and the like made without departing from the spirit and principles of this application still fall within the protection scope of this application.

**Claims**

1. A secondary battery (001), comprising an electrolyte solution, a housing (02), and an electrode assembly (01) of a laminated structure; wherein along a thickness direction of the electrode assembly (01), the electrode assembly (01) comprises first electrode plates (10), second electrode plates (20), and separators (30) disposed between the first electrode plate (10) and the second electrode plates (20); the electrode assembly (01) further comprises a first tab assembly (13) and a second tab assembly (23), the first tab assembly (13) comprises a plurality of first tabs (131), the second tab assembly (23) comprises a plurality of second tabs (231), the plurality of first tabs correspond to the first electrode plates (10) one to one, and the plurality of second tabs (231) correspond to the second electrode plates (20) one to one;

   the first electrode plates (10) comprise two outer first electrode plates (101) and at least one inner first electrode plate (102); along the thickness direction of the electrode assembly (01), the two outer first electrode plates (101) are located on two outermost sides of the electrode assembly (01), respectively, and the inner first electrode plate (102) is located between the two outer first electrode plates (101); each first electrode plate (10) comprises a first current collector (11) and a first active material layer (12), the first current collector (11) comprises a first surface and a second surface that are oppositely disposed along the thickness direction of the electrode assembly (01), the first surface is closer to the housing (02) than the second surface, and the first active material layer (12) is disposed on both the first surface and the second surface of the first current collector (11) of the at least one inner first electrode plate (102);

at least one of the outer first electrode plates (101) is a single-sided first electrode plate, the first active material layer (12) is not disposed on the first surface of the first current collector (11) of the single-sided first electrode plate, and the first active material layer (12) is disposed on the second surface of the first current collector of (11) the single-sided first electrode plate, the first active material layer (12) disposed on the second surface of the single-sided first electrode plate comprises a first material layer (121) and a second material layer (122), and the first material layer (121) is located between the (11) of the single-sided first electrode plate and the second material layer (122); and

a conductivity of the single-sided first electrode plate is A S/cm, and a conductivity of the inner first electrode plate (102) is B S/cm, wherein $A \leq B$.

2. The secondary battery (001) according to claim 1, **characterized in that** $0.3 \leq A / B \leq 1$.

3. The secondary battery (001) according to claim 2, **characterized in that** $0.65 \leq A/ B \leq 1$.

4. The secondary battery (001) according to any one of claims 1 to 3, **characterized in that** the first electrode plates (10) are positive electrode plates.

5. The secondary battery (001) according to claim 4, **characterized in that** the first material layer (121) comprises a first active material, the first active material comprising at least one of lithium iron phosphate, lithium manganese iron phosphate, or lithium manganese oxide; and the second material layer (122) comprises a second active material, the second active material comprising at least one of lithium cobalt oxide, lithium nickelate, lithium manganese oxide, a nickel-cobalt-manganese ternary material, or a lithium-rich manganese based material.

6. The secondary battery (001) according to claim 5, **characterized in that** Dv50 of the first active material is 3 μm to 25 μm, and Dv99 of the first active material is 10 μm to 65 μm; and Dv50 of the second active material is 4.5 μm to 24.5 μm, and Dv99 of the second active material is 45 μm to 65 μm.

7. The secondary battery (001) according to claim 4, **characterized in that** the secondary battery (001) satisfies at least one of the following conditions:

   (a) the first material layer (121) comprises a first binder, the second material layer (122) comprises a second binder, the first binder and the second binder each are at least one independently selected from polyvinylidene difluoride, polyvinylidene chloride, polyvinyl dichloride, aramid, polyamide, polyacrylonitrile, an acrylate polymer, styrene-butadiene rubber, a polyacrylate salt, sodium carboxymethylcellulose, polyvinylpyrrolidone, polyvinyl ether, a pure acrylic emulsion, or polyacrylic acid; and based on a mass of the first material layer (121), a mass percentage of the first binder is 0.5% to 5%, and based on the mass of the second material layer (122), a mass percentage of the second binder is 0.4% to 5%;
   (b) the first material layer (121) comprises a first conductive agent, the second material layer (122) comprises a second conductive agent, the first conductive agent and the second conductive agent each are at least one independently selected from conductive carbon black, carbon nanotubes, graphene, or conductive graphite; and based on the mass of the first material layer (121), a mass percentage of the first conductive agent is 1% to 10%, and based on the mass of the second material layer (122), a mass percentage of the second conductive agent is 1% to 10%;
   (c) a thickness of the first material layer (121) is 20 μm to 60 μm, and a thickness of the second material layer (122) is 20 μm to 150 μm;
   (d)

$$0.01 \leq B \leq 0.8;$$

   or
   (e) the housing (02) is an aluminum laminated film.

8. The secondary battery (001) according to claim 4, **characterized in that** the first active material layers (12) disposed on the first surface and the second surface of the current collector of the inner first electrode plate (102) are third material layers (123), each third material layer (123) comprises a third active material; and the third active material comprises at least one of lithium cobalt oxide, lithium nickelate, lithium manganese oxide, a nickel-cobalt-manganese ternary material, or a lithium-rich manganese based material; and based on a mass of the third material layer (123), a mass percentage of the third active material is 85% to 98.6%.

9. The secondary battery (001) according to claim 8, **characterized in that** a thickness of the third material layer (123) is 80 $\mu$m to 250 $\mu$m.

10. The secondary battery (001) according to claim 1 or 2, **characterized in that** a thickness of the first current collector (11) of the single-sided first electrode plate is $T_1$ $\mu$m, and a thickness of the first current collector (11) of the inner first electrode plate (102) is $T_2$ $\mu$m, $T_1 \geq T_2$.

11. The secondary battery (001) according to claim 10, **characterized in that** the first electrode plates (10) are positive electrode plates, $12 \leq T_1 \leq 25$, and $6 \leq T_2 \leq 16$.

12. The secondary battery (001) according to claim 10, **characterized in that** the first electrode plates (10) are negative electrode plates, $14 \leq T_1 \leq 25$, and $4 \leq T_2 \leq 16$.

13. The secondary battery (001) according to claim 1 or 2, **characterized in that** the first electrode plates (10) are negative electrode plates, the first material layer (121) comprises a first active material, a conductivity of the first active material is c S/cm, the second material layer (122) comprises a second active material, and a conductivity of the second active material is d S/cm, c < d; and the first active material and the second active material each are at least one independently selected from natural graphite, artificial graphite, mesocarbon microbeads, hard carbon, soft carbon, silicon, or a silicon-carbon complex.

14. The secondary battery (001) according to claim 13, **characterized in that** the housing (02) is a metal shell.

15. A preparation method for the secondary battery (001) according to any one of claims 1 to 14, comprising the following steps: preparing the at least one single-sided first electrode plate, the at least one inner first electrode plate (102), the plurality of second electrode plates (20), the plurality of separators (30), the electrolyte solution and the housing (02), and performing assembling to obtain the secondary battery (001);

   wherein a preparation method for the single-sided first electrode plate comprises the following steps: disposing the first material layer (121) and the second material layer (122) on the second surface of the first current collector (11) in sequence to obtain the single-sided first electrode plate; and
   a preparation method for the inner first electrode plate (102) comprises the following steps: disposing the first active material layers (12) on both the first surface and the second surface of the first current collector (11) to obtain the inner first electrode plate.

16. The preparation method according to claim 15, **characterized in that** the first material layer (121) comprises a first active material, a conductivity of the first active material is a S/cm, the second material layer (122) comprises a second active material, and a conductivity of the second active material is b S/cm, a < b.

17. An electronic apparatus, comprising the secondary battery (001) according to any one of claims 1 to 14, or the secondary battery (001) prepared by the preparation method according to claim 15 or 16.

001

FIG. 1

001

FIG. 2

**EUROPEAN SEARCH REPORT**

Europäisches
Patentamt
European
Patent Office
Office européen
des brevets

Application Number

EP 25 19 9223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 117 728 043 A (NINGDE AMPEREX TECHNOLOGY LTD) 19 March 2024 (2024-03-19) * paragraphs [0029] - [0141]; figures 1-3 * ----- | 1-17 | INV. H01M4/131 H01M4/36 H01M4/505 H01M4/525 |
| A | CN 117 438 664 A (SAMSUNG SDI CO LTD) 23 January 2024 (2024-01-23) * paragraphs [0096] - [0262]; figure 1 * ----- | 1-17 | H01M4/58 H01M4/62 H01M10/0525 H01M10/0585 H01M50/105 |

TECHNICAL FIELDS
SEARCHED (IPC)

H01M

The present search report has been drawn up for all claims

| Place of search | Date of completion of the search | Examiner |
|---|---|---|
| Munich | 3 February 2026 | Tsipouridis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 9223

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | | Publication date | Patent family member(s) | | Publication date |
|---|---|---|---|---|---|
| CN 117728043 | A | 19-03-2024 | CN | 117728043 A | 19-03-2024 |
| | | | US | 2025219062 A1 | 03-07-2025 |
| CN 117438664 | A | 23-01-2024 | CN | 117438664 A | 23-01-2024 |
| | | | EP | 4312283 A1 | 31-01-2024 |
| | | | JP | 7657862 B2 | 07-04-2025 |
| | | | JP | 2024014832 A | 01-02-2024 |
| | | | KR | 20240013988 A | 31-01-2024 |
| | | | US | 2024030415 A1 | 25-01-2024 |

EPO FORM P0459

For more details about this annex : see Official Journal of the European Patent Office, No. 12/82